# EUROPEAN PATENT SPECIFICATION

(11) **EP 4 270 719 B1**
(45) Date of publication and mention of the grant of the patent: **25.11.2026**
(21) Application number: 21920258.7
(22) Date of filing: 21.01.2021
(51) Int. Cl.: H02J 7/56, H02J 7/50, H02J 7/94

(54) **CHARGING CIRCUIT OF BATTERY, AND ELECTRONIC DEVICE**
LADESCHALTUNG EINER BATTERIE UND ELEKTRONISCHE VORRICHTUNG
CIRCUIT DE CHARGE D'UNE BATTERIE, ET DISPOSITIF ÉLECTRONIQUE

(43) Date of publication of application: 01.11.2023
(73) Proprietor: Huawei Technologies Co., Ltd., Shenzhen, Guangdong 518129 (CN)
(72) Inventor: LI, Hui, Shenzhen, Guangdong 518129 (CN); LIU, Deshang, Shenzhen, Guangdong 518129 (CN); XU, Pengju, Shenzhen, Guangdong 518129 (CN)
(74) Representative: Thun, Clemens
(86) International application number: PCT/CN2021/073140
(87) International publication number: WO 2022/155856

(56) References cited:
- CN-A- 107 947 291
- CN-A- 109 038 716
- CN-U- 212 012 133
- CN-U- 212 114 857
- CN-Y- 2 859 895
- US-A1- 2006 244 420
- US-A1- 2007 085 523
- US-A1- 2019 020 074

## Description

### TECHNICAL FIELD

This application relates to the field of battery charging, and in particular, to a charging circuit of a battery and an electronic device.

### BACKGROUND

Currently, some mobile phones use dual-battery charging circuits to improve battery charge-discharge efficiency. The dual-battery charging circuit includes several architectures such as series charging and series discharging (that is, two batteries are charged and discharged in series), series charging and parallel discharging (that is, two batteries are charged in series and discharged in parallel), and parallel charging and parallel discharging (that is, two batteries are charged and discharged in parallel). The series charging and series discharging is characterized by a simple structure, and easy control, but discharge loss is large. In the series charging and parallel discharging, a shape of the dual batteries needs to be changed, and control is complex. In the parallel charging and parallel discharging, a shape of the dual batteries does not need to be changed, and control is simple.

However, current parallel charging and parallel discharging has a high matching requirement for two batteries. When capacities of the two batteries are inconsistent, a voltage difference between the two batteries during charging may easily be excessively large. As a result, a charging current decreases, charging duration increases, and user experience deteriorates. In addition, because the voltage difference between the two batteries is excessively large, and if an internal resistance of the battery is large, a system voltage ripple is large.
The document US 2019/0020074 A1 shows a secondary battery protection circuit and a battery pack comprising the same.
The document US 2006/0244420 A1 shows a charging circuit for parallel charging in multiple battery systems.

### SUMMARY

The present invention is defined by the independent claims. Further advantageous developments are shown by the dependent claims.

Embodiments of this application provide a charging circuit of a battery and an electronic device, to reduce a battery charging time.

To achieve the foregoing objectives, the following technical solutions are used in embodiments of this application.

According to a first aspect, a charging circuit of a battery is provided, including: a voltage regulation circuit, a first adjustment transistor, a second adjustment transistor, a first operational amplifier, a second operational amplifier, and a fully differential operational amplifier. The voltage regulation circuit is configured to provide a first charging current to a first charging path through the first adjustment transistor, and is further configured to provide a second charging current to a second charging path through the second adjustment transistor. A non-inverting input end of the fully differential operational amplifier is configured to input a first charging voltage to the first charging path, an inverting input end of the fully differential operational amplifier is configured to input a second charging voltage to the second charging path, an inverting output end of the fully differential operational amplifier is configured to output a first signal, and a non-inverting output end of the fully differential operational amplifier is configured to output a second signal. A first non-inverting input end of the first operational amplifier is configured to input the first signal, an inverting input end of the first operational amplifier is configured to input a first detection signal proportional to the first charging current, and the first operational amplifier is further configured to output a first control voltage to a gate of the first adjustment transistor to adjust the first charging current. A first non-inverting input end of the second operational amplifier is configured to input the second signal, an inverting input end of the second operational amplifier is configured to input a second detection signal proportional to the second charging current, and the second operational amplifier is further configured to output a second control voltage to a gate of the second adjustment transistor to adjust the second charging current.

The charging circuit of the battery provided in embodiments of this application includes two charging paths for separately charging the two batteries. If voltages of the two batteries are equal, the first signal and the second signal outputted by the fully differential operational amplifier are equal, and according to a voltage following principle of the operational amplifier, the first detection signal and the second detection signal are equal. Therefore, the first charging current proportional to the first detection signal and the second charging current proportional to the second detection signal are balanced, so that the voltages of the two batteries are kept equal during charging. If the voltages of the two batteries are not equal, for example, if the second charging voltage is greater than the first charging voltage, the first signal outputted by the fully differential operational amplifier is greater than the second signal. According to a voltage following principle of the operational amplifier, the first detection signal is greater than the second detection signal. Therefore, the first charging current proportional to the first detection signal increases, and the second charging current proportional to the second detection signal decreases, so that the first charging voltage increases more rapidly until the two batteries restore to a same voltage for charging and simultaneously reach a charging stop state, and a charging time of the dual batteries is shortened.

In a possible implementation, the first operational amplifier further includes a second non-inverting input end, the second non-inverting input end of the first operational amplifier is configured to input a first limit signal, and the first operational amplifier is further configured to: select a smaller value between the first limit signal and the first signal, and perform differential amplification on the first detection signal to output the first control voltage. Due to an existence of the first limit signal, according to a voltage following principle of a negative feedback loop of the operational amplifier, the first detection signal is limited to be at most equal to the first limit signal, that is, a maximum value of the first charging current is limited. This can protect the first battery and prevent damage to the first battery caused by an excessively large first charging current.

In a possible implementation, the second operational amplifier further includes a second non-inverting input end, the second non-inverting input end of the second operational amplifier is configured to input a second limit signal, and the second operational amplifier is further configured to: select a smaller value between the second limit signal and the second signal, and perform differential amplification on the second detection signal to output the second control voltage. Due to an existence of the second limit signal, according to the voltage following principle of the negative feedback loop of the operational amplifier, the second detection signal is limited to be at most equal to the second limit signal, that is, a maximum value of the second charging current is limited. This can protect the second battery and prevent damage to the second battery caused by an excessively large second charging current.

In a possible implementation, the charging circuit further includes a third operational amplifier and a first resistor. The first resistor is disposed on a path of the first charging current, a non-inverting input end of the third operational amplifier is coupled to an end with a higher voltage of the first resistor, an inverting input end of the third operational amplifier is coupled to an end with a lower voltage of the first resistor, and an output end of the third operational amplifier is coupled to the inverting input end of the first operational amplifier. This implementation provides a possible manner of obtaining the first detection signal proportional to the first charging current.

In a possible implementation, the charging circuit further includes a fourth operational amplifier and a second resistor. The second resistor is disposed on a path of the second charging current, a non-inverting input end of the fourth operational amplifier is coupled to an end with a higher voltage of the second resistor, an inverting input end of the fourth operational amplifier is coupled to an end with a lower voltage of the second resistor, and an output end of the fourth operational amplifier is coupled to the inverting input end of the second operational amplifier. This implementation provides a possible manner of obtaining the second detection signal proportional to the second charging current.

In a possible implementation, the first signal, the second signal, the first detection signal, and the second detection signal are voltage signals. The first signal, the second signal, the first detection signal, and the second detection signal may also be current signals. This is not limited in this application.

According to a second aspect, a charging circuit of a battery is provided, including: a voltage regulation circuit, a first battery, a second battery, a first adjustment transistor, a second adjustment transistor, a first operational amplifier, a second operational amplifier, a fifth operational amplifier, and a sixth operational amplifier. The voltage regulation circuit is configured to provide, through the first adjustment transistor, a first charging current to a first charging path on which the first battery is located, and is further configured to provide, through the second adjustment transistor, a second charging current to a second charging path on which the second battery is located. A non-inverting input end of the fifth operational amplifier is configured to input a second charging voltage to the second charging path or a bias voltage of the second charging voltage, an inverting input end of the fifth operational amplifier is configured to input a first charging voltage to the first charging path or a bias voltage of the first charging voltage, and an output end of the fifth operational amplifier is configured to output a first signal. A non-inverting input end of the sixth operational amplifier is configured to input the first charging voltage or the bias voltage of the first charging voltage, an inverting input end of the sixth operational amplifier is configured to input the second charging voltage or the bias voltage of the second charging voltage, and an output end of the sixth operational amplifier is configured to output a second signal. A first non-inverting input end of the first operational amplifier is configured to input the first signal, an inverting input end of the first operational amplifier is configured to input a first detection signal proportional to the first charging current, and the first operational amplifier is further configured to output a first control voltage to a gate of the first adjustment transistor to adjust the first charging current. A first non-inverting input end of the second operational amplifier is configured to input the second signal, an inverting input end of the second operational amplifier is configured to input a second detection signal proportional to the second charging current, and the first operational amplifier is further configured to output a second control voltage to a gate of the second adjustment transistor to adjust the second charging current.

According to the charging circuit of the battery provided in embodiments of this application, if voltages of two batteries are equal, the first signal and the second signal outputted by the fully differential operational amplifier are equal, and according to a voltage following principle of the operational amplifier, the first detection signal and the second detection signal are equal. Therefore, the first charging current proportional to the first detection signal and the second charging current proportional to the second detection signal are balanced, so that the voltages of the two batteries are kept equal during charging. If the voltages of the two batteries are not equal, for example, if the second charging voltage is greater than the first charging voltage, the first signal outputted by the fully differential operational amplifier is greater than the second signal. According to a voltage following principle of the operational amplifier, the first detection signal is greater than the second detection signal. Therefore, the first charging current proportional to the first detection signal increases, and the second charging current proportional to the second detection signal decreases, so that the first charging voltage increases more rapidly until the two batteries restore to a same voltage for charging and simultaneously reach a charging stop state, and a charging time of the dual batteries is shortened.

In a possible implementation, the non-inverting input end of the fifth operational amplifier is configured to input the second charging voltage plus a first bias voltage, and the inverting input end of the fifth operational amplifier is configured to input the first charging voltage. This implementation provides a possible manner of obtaining the bias voltage of the first charging voltage.

In a possible implementation, the non-inverting input end of the fifth operational amplifier is configured to input the second charging voltage, and the inverting input end of the fifth operational amplifier is configured to input the first charging voltage minus the first bias voltage. This implementation provides a possible manner of obtaining the bias voltage of the first charging voltage.

In a possible implementation, the non-inverting input end of the sixth operational amplifier is configured to input the first charging voltage plus a second bias voltage, and the inverting input end of the sixth operational amplifier is configured to input the second charging voltage. This implementation provides a possible manner of obtaining the bias voltage of the second charging voltage.

In a possible implementation, the non-inverting input end of the sixth operational amplifier is configured to input the first charging voltage, and the inverting input end of the sixth operational amplifier is configured to input the second charging voltage minus the second bias voltage. This implementation provides a possible manner of obtaining the bias voltage of the second charging voltage.

In a possible implementation, the non-inverting input end of the fifth operational amplifier is configured to input the second charging voltage plus the first bias voltage, and the inverting input end of the fifth operational amplifier is configured to input the first charging voltage minus the second bias voltage. This implementation provides a possible manner of obtaining the bias voltage of the first charging voltage and the bias voltage of the second charging voltage.

In a possible implementation, the non-inverting input end of the sixth operational amplifier is configured to input the first charging voltage plus a third bias voltage, and the inverting input end of the sixth operational amplifier is configured to input the second charging voltage minus a fourth bias voltage. This implementation provides a possible manner of obtaining the bias voltage of the first charging voltage and the bias voltage of the second charging voltage.

In a possible implementation, the first operational amplifier further includes a second non-inverting input end, the second non-inverting input end of the first operational amplifier is configured to input a first limit signal, and the first operational amplifier is further configured to: select a smaller value between the first limit signal and the first signal, and perform differential amplification on the first detection signal to output the first control voltage. Due to an existence of the first limit signal, according to a voltage following principle of a negative feedback loop of the operational amplifier, the first detection signal is limited to be at most equal to the first limit signal, that is, a maximum value of the first charging current is limited. This can protect the first battery and prevent damage to the first battery caused by an excessively large first charging current.

In a possible implementation, the second operational amplifier further includes a second non-inverting input end, the second non-inverting input end of the second operational amplifier is configured to input a second limit signal, and the second operational amplifier is further configured to: select a smaller value between the second limit signal and the second signal, and perform differential amplification on the second detection signal to output the second control voltage. Due to an existence of the second limit signal, according to the voltage following principle of the negative feedback loop of the operational amplifier, the second detection signal is limited to be at most equal to the second limit signal, that is, a maximum value of the second charging current is limited. This can protect the second battery and prevent damage to the second battery caused by an excessively large second charging current.

In a possible implementation, the charging circuit further includes a third operational amplifier and a first resistor. The first resistor is disposed on a path of the first charging current, a non-inverting input end of the third operational amplifier is coupled to an end with a higher voltage of the first resistor, an inverting input end of the third operational amplifier is coupled to an end with a lower voltage of the first resistor, and an output end of the third operational amplifier is coupled to the inverting input end of the first operational amplifier. This implementation provides a possible manner of obtaining the first detection signal proportional to the first charging current.

In a possible implementation, the charging circuit further includes a fourth operational amplifier and a second resistor. The second resistor is disposed on a path of the second charging current, a non-inverting input end of the fourth operational amplifier is coupled to an end with a higher voltage of the second resistor, an inverting input end of the fourth operational amplifier is coupled to an end with a lower voltage of the second resistor, and an output end of the fourth operational amplifier is coupled to the inverting input end of the second operational amplifier. This implementation provides a possible manner of obtaining the second detection signal proportional to the second charging current.

In a possible implementation, the first signal, the second signal, the first detection signal, and the second detection signal are voltage signals. The first signal, the second signal, the first detection signal, and the second detection signal may also be current signals. This is not limited in this application.

According to a third aspect, an electronic device is provided, including the charging circuit and a working circuit of the battery according to any one of the first aspect to the second aspect and any implementation thereof, and the charging circuit of the battery is configured to supply power to the working circuit.

For technical effects of the third aspect, refer to technical effects of the first aspect and the second aspect. Details are not repeated herein again.

### BRIEF DESCRIPTION OF DRAWINGS

FIG. 1 is a schematic diagram 1 of a structure of an electronic device including a charging circuit of a battery according to an embodiment of this application;
FIG. 2 is a schematic diagram 2 of a structure of an electronic device including a charging circuit of a battery according to an embodiment of this application;
FIG. 3 is a schematic diagram 3 of a structure of an electronic device including a charging circuit of a battery according to an embodiment of this application;
FIG. 4 is a schematic diagram 4 of a structure of an electronic device including a charging circuit of a battery according to an embodiment of this application;
FIG. 5 is a schematic diagram 1 of a structure of a charging circuit of a battery according to an embodiment of this application;
FIG. 6 is a schematic diagram 2 of a structure of a charging circuit of a battery according to an embodiment of this application;
FIG. 7 is a schematic diagram 3 of a structure of a charging circuit of a battery according to an embodiment of this application;
FIG. 8 is a schematic diagram 4 of a structure of a charging circuit of a battery according to an embodiment of this application;
FIG. 9 is a schematic diagram 5 of a structure of a charging circuit of a battery according to an embodiment of this application;
FIG. 10 is a schematic diagram 6 of a structure of a charging circuit of a battery according to an embodiment of this application; and
FIG. 11 is a schematic diagram 7 of a structure of a charging circuit of a battery according to an embodiment of this application.

### DESCRIPTION OF EMBODIMENTS

As described above, charging circuits of several parallel charging and parallel discharging batteries are first described.

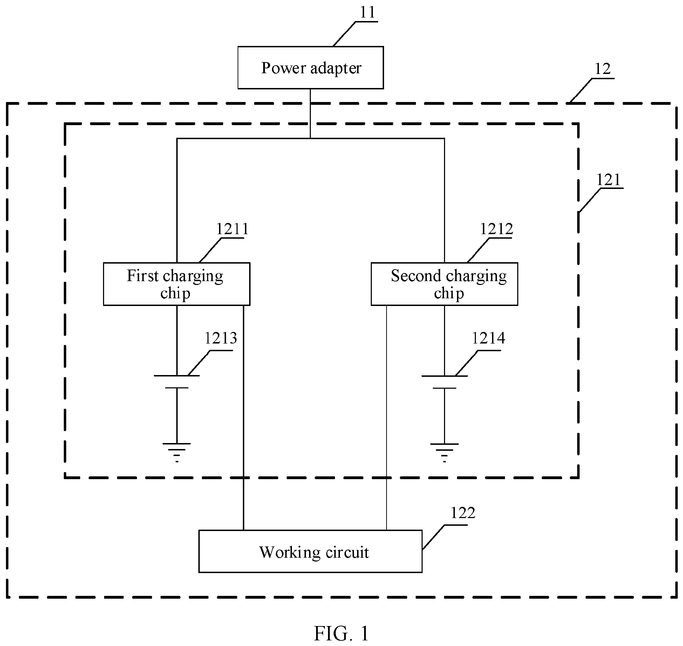

As shown in FIG. 1, an embodiment of this application provides an electronic device including a charging circuit of a battery. The electronic device 12 includes a charging circuit 121 and a working circuit 122 of the battery.

During charging, a power adapter 11 converts mains electricity into a direct current through alternating current to direct current conversion to supply power to the battery in the charging circuit 121 of the battery. During normal working, the charging circuit 121 of the battery supplies power to the working circuit 122. The working circuit 122 includes a processor, a memory, a communication interface, and the like. This is not limited.

The charging circuit 121 of the battery includes a first charging chip 1211, a second charging chip 1212, a first battery 1213, and a second battery 1214.

The power adapter 11 charges the first battery 1213 through the first charging chip 1211, and the power adapter 11 further charges the second battery 1214 through the second charging chip 1212. That is, the two charging chips separately control charging of one battery. Although the charging circuit of the battery has a simple structure and is easy to control, when capacities of the two batteries are inconsistent, a voltage difference between the two batteries during charging may easily be excessively large. As a result, a total charging current decreases, charging duration increases, and user experience deteriorates. In addition, because the voltage difference between the two batteries is excessively large, and if an internal resistance of the battery is large, a system voltage ripple is large.

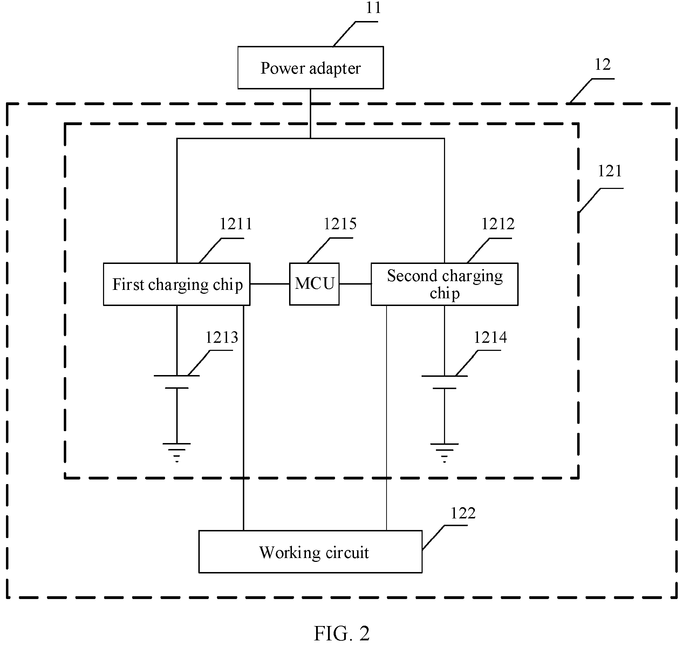

As shown in FIG. 2, based on FIG. 1, an embodiment of this application provides another electronic device including a charging circuit of a battery. The charging circuit 121 of the battery may further include a micro-controller unit (MCU) 1215. The MCU 1215 controls the two charging chips to separately adjust charging voltages of corresponding batteries, so as to reduce a voltage difference between the two batteries and improve charging efficiency. However, a hardware cost of the charging circuit of the battery is high, and a control logic of the MCU is complex.

Therefore, an embodiment of this application provides another electronic device including a charging circuit of a battery. Voltages of two batteries are compared by using an analog circuit, and a charging current of a battery with a low voltage is increased until the two batteries are charged at a same voltage, so that the charging efficiency may be improved.

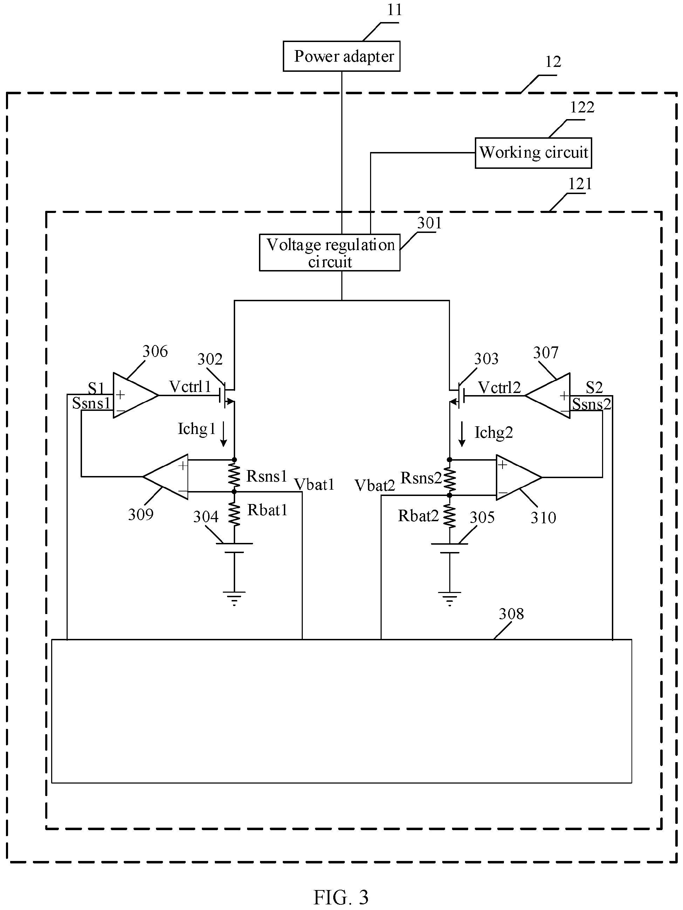

As shown in FIG. 3, an electronic device 12 includes a charging circuit 121 and a working circuit 122 of a battery. The working circuit 122 may include a component that consumes electric energy, such as a processor, a memory, or a communication interface. This is not specifically limited.

When the electronic device 12 is charged, the power adapter 11 charges the two batteries through the charging circuit 121 of the battery. When the electronic device 12 works normally, the charging circuit 121 of the battery is further configured to supply power to the working circuit 122.

The charging circuit 121 of the battery includes: a voltage regulation circuit 301, a first adjustment transistor 302, a second adjustment transistor 303, a first battery 304, a second battery 305, a first operational amplifier 306, a second operational amplifier 307, and an operational amplifier circuit 308. In another optional embodiment, the charging circuit 121 of the battery may further include a third operational amplifier 309, a fourth operational amplifier 310, a first resistor Rsns1, and a second resistor Rsns2. In addition, Rbat1 in the figure is an equivalent resistor of the first battery 304, and Rbat2 is an equivalent resistor of the second battery 305.

The voltage regulation circuit 301 may provide, through the first adjustment transistor 302, a first charging current Ichg1 to a first charging path on which the first battery 304 is located, and is further configured to provide, through the second adjustment transistor 303, a second charging current Ichg2 to a second charging path on which the second battery 304 is located.

The voltage regulation circuit 301 may be a circuit that performs direct current voltage conversion, such as a direct current-direct current conversion circuit (for example, a BUCK circuit) or a direct current-direct current conversion chip (for example, a BUCK chip). This is not limited in this application. The first adjustment transistor 302 and the second adjustment transistor 303 may be components that control a current by using a voltage, such as a metal-oxide-semiconductor field-effect transistor (metal-oxide-semiconductor field-effect transistor, MOSFET).

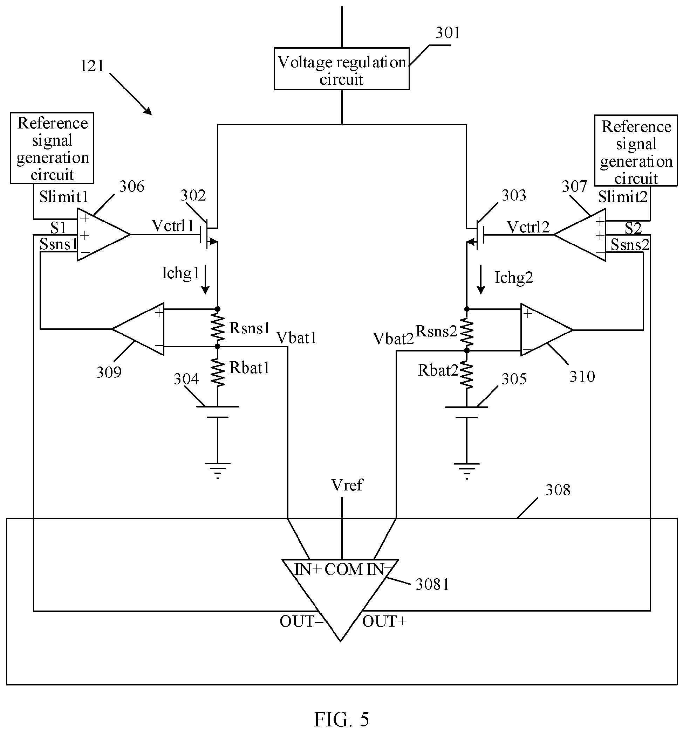

The operational amplifier circuit 308 is configured to input a first charging voltage Vbat1 to the first charging path and a second charging voltage Vbat2 to the second charging path; and output a first signal S1 to the first operational amplifier 306, and output a second signal S2 to the second operational amplifier 307. A voltage difference between the second charging voltage Vbat2 and the first charging voltage Vbat1 is proportional to the first signal S1. A voltage difference between the first charging voltage Vbat1 and the second charging voltage Vbat2 is proportional to the second signal S2. Several possible structures of the operational amplifier circuit 308 are described later with reference to FIG. 5 to FIG. 10.

A working principle of the operational amplifier is as follows: A signal (such as a voltage or a current) outputted by the operational amplifier is obtained by multiplying the difference between the signals (such as the voltage or the current) at the non-inverting input end and the inverting input end of the operational amplifier by the amplification coefficient of the operational amplifier. The "signal" in this application may be a voltage or a current. An example in which the signal is a voltage may be used, but this is not limited thereto.

The first operational amplifier 306 includes a first non-inverting input end and an inverting input end. The first non-inverting input end of the first operational amplifier 306 is configured to input the first signal S1, and the inverting input end of the first operational amplifier 306 is configured to input a first detection signal Ssns1 proportional to the first charging current Ichg1. The first operational amplifier 306 is further configured to output a first control voltage Vctrl1 to a gate of the first adjustment transistor 302 to adjust the first charging current Ichg1. The first control voltage Vctrl1 is equal to a difference between the first signal S1 and the first detection signal Ssns1 multiplied by an amplification coefficient of the first operational amplifier 306.

The first detection signal Ssns1 proportional to the first charging current Ichg1 may be obtained through the third operational amplifier 309 and the first resistor Rsns1. The first resistor Rsns1 is disposed on a path of the first charging current Ichg1 (for example, a path between the first adjustment transistor 302 and the first battery 304), a non-inverting input end of the third operational amplifier 309 is coupled to an end with a higher voltage of the first resistor Rsns1 (for example, an end coupled to the first adjustment transistor 302), an inverting input end of the third operational amplifier 309 is coupled to an end with a lower voltage of the first resistor Rsns1 (for example, an end coupled to the first battery 304), and an output end of the third operational amplifier 309 is coupled to the inverting input end of the first operational amplifier 306. In this case, the first detection signal Ssns1=Rsns1*Ichg1*A3, that is, the first detection signal Ssns1 is proportional to the first charging current Ichg1, where A3 is an amplification coefficient of the third operational amplifier 309.

A specific circuit for collecting the first detection signal Ssns1 is not limited in this application. A possible implementation is shown in the figure, but is not intended to be limited.

The second operational amplifier 307 includes a first non-inverting input end and an inverting input end. The first non-inverting input end of the second operational amplifier 307 is configured to input the second signal S2, and the inverting input end of the second operational amplifier 307 is configured to input the second detection signal Ssns2 proportional to the second charging current Ichg2. The second operational amplifier 307 is further configured to output the second control voltage Vctrl2 to a gate of the second adjustment transistor 303 to adjust the second charging current Ichg2. The second control voltage Vctrl2 is equal to a difference between the second signal S2 and the second detection signal Ssns2 multiplied by an amplification coefficient of the second operational amplifier 307.

The second detection signal Ssns2 proportional to the second charging current Ichg2 may be obtained through the fourth operational amplifier 310 and the second resistor Rsns2. The second resistor Rsns2 is disposed on a path of the second charging current Ichg2, (for example, a path between the second adjustment transistor 303 and the second battery 305), a non-inverting input end of the fourth operational amplifier 310 is coupled to an end with a higher voltage of the second resistor Rsns2 (for example, an end coupled to the second adjustment transistor 303), an inverting input end of the fourth operational amplifier 310 is coupled to an end with a lower voltage of the second resistor Rsns2 (for example, an end coupled to the second battery 305), and an output end of the fourth operational amplifier 310 is coupled to an inverting input end of the second operational amplifier 307. The second detection signal Ssns2=Rsns2*Ichg2*A4, that is, the second detection signal Ssns2 is proportional to the second charging current Ichg2, where A4 is an amplification coefficient of the fourth operational amplifier 310.

A specific circuit for collecting the second detection signal Ssns2 is not limited in this application. A possible implementation is shown in the figure, but is not intended to be limited.

The first signal S1, the second signal S2, the first detection signal Ssns1, and the second detection signal Ssns2 may be voltage signals or current signals. In this application, the voltage signal is used as an example, but is not intended to be limited thereto.

The operational amplifier circuit 308, the first operational amplifier 306, and the first adjustment transistor 302 form a negative feedback loop of the first operational amplifier 306, and the operational amplifier circuit 308, the second operational amplifier 307, and the second adjustment transistor 303 form a negative feedback loop of the second operational amplifier 307.

A voltage following principle of the negative feedback loop of the operational amplifier is as follows: An output of the operational amplifier is coupled to the inverting input end of the operational amplifier, and the output of the operational amplifier (that is, an input of the inverting input end) follows an input of the non-inverting input end of the operational amplifier. That is, if the first detection signal Ssns1 is equal to the first signal S1, there is S1=Ssns1=Rsns1*Ichg1*A3. If the second detection signal Ssns2 is equal to the first signal S2, there is S2=Ssns2=Rsns2*Ichg2*A4.

A working principle of the charging circuit of the battery is as follows:

Assuming that in a balanced state, if the voltages of the two batteries during charging are equal, the first signal S1 and the second signal S2 outputted by the operational amplifier circuit are the same, and the first detection signal Ssns1 is equal to the second detection signal Ssns2. Assuming that Rsns2=Rsns1, and A3=A4, there is Ichg1=Ichg2, that is, the first charging current Ichg1 is equal to the second charging current Ichg2. If the voltages of the two batteries are not equal, for example, if the second charging voltage is greater than the first charging voltage, the first signal S1 outputted by the operational amplifier circuit is greater than the second signal S2. According to the voltage following principle of the negative feedback loop of the operational amplifier, in this way, the first detection signal Ssns1 is greater than the second detection signal Ssns2, the first charging current Ichg1 proportional to the first detection signal Ssns1 increases, and the second charging current Ichg2 proportional to the second detection signal Ssns2 decreases. Assuming that Rsns2=Rsns1, and A3=A4, there is Ichg1>Ichg2, so that the first charging voltage increases more rapidly until the two batteries are stably charged at the same voltage and simultaneously reach a charging stop state, and a charging time of the dual batteries is shortened. In addition, a voltage drop VDROP on the two regulation transistors may be minimized by keeping the voltages of the two batteries consistent, thereby improving charging efficiency.

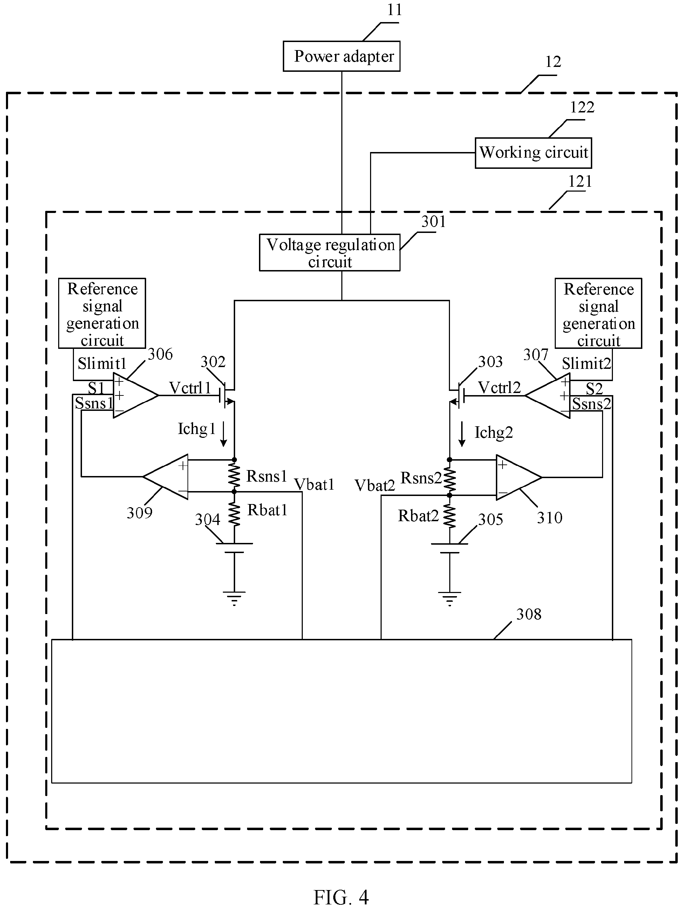

In another optional embodiment, as shown in FIG. 4, the first operational amplifier 306 may further include a second non-inverting input end, the second non-inverting input end of the first operational amplifier 306 is configured to input the first limit signal Slimit1, and the first operational amplifier 306 is further configured to: select a smaller value inputted by the first non-inverting input end and the second non-inverting input end, and perform differential amplification on a signal inputted by the inverting input end, to output the first control voltage Vctrl1. That is, the first operational amplifier 306 selects a smaller value between the first limit signal Slimit1 and the first signal S1, and performs differential operation on the first detection signal Ssns1, to output the first control voltage Vctrl1. Due to an existence of the first limit signal Slimit1, according to the voltage following principle of the negative feedback loop of the operational amplifier, the first detection signal Ssns1 is limited to be at most equal to the first limit signal Slimit1, that is, a maximum value of the first charging current Ichg1 is limited. This can protect the first battery 304 and prevent damage to the first battery 304 caused by an excessively large first charging current Ichg1.

In another optional embodiment, as shown in FIG. 4, the second operational amplifier 307 may further include a second non-inverting input end, the second non-inverting input end of the second operational amplifier 307 is configured to input the second limit signal Slimit2, and the second operational amplifier 307 is further configured to: select a smaller value inputted by the first non-inverting input end and the second non-inverting input end, and perform differential amplification on a signal inputted by the inverting input end, to output the second control voltage Vctrl2. That is, the second operational amplifier 307 selects a smaller value of the second limit signal Slimit2 and the second signal S2, and performs differential operation on the second detection signal Ssns2, to output the second control voltage Vctrl2. Due to an existence of the second limit signal Slimit2, according to the voltage following principle of the negative feedback loop of the operational amplifier, the second detection signal Ssns2 is limited to be at most equal to the second limit signal Slimit2, that is, a maximum value of the second charging current Ichg2 is limited. This can protect the second battery 305 and prevent damage to the second battery 305 caused by an excessively large second charging current Ichg2.

The first limit signal Slimit1 and the second limit signal Slimit2 may be obtained through the reference signal generation circuit (for example, a reference voltage generation circuit, a reference current generation circuit). A structure of the reference signal generation circuit is not limited in this application. The first limit signal Slimit1 and the second limit signal Slimit2 may be voltage signals current signals. In this application, the voltage signal is used as an example, but is not intended to be limited thereto.

The following uses the charging circuit 121 of the battery in FIG. 4 as an example to describe a possible structure of the operational amplifier circuit 308.

In a possible implementation, as shown in FIG. 5, the operational amplifier circuit 308 includes a fully differential operational amplifier 3081. A non-inverting input end IN+ of the fully differential operational amplifier 3081 is configured to input a first charging voltage Vbat1. An inverting input end IN- of the fully differential operational amplifier 3081 is configured to input a second charging voltage Vbat2. An inverting output end OUT- of the fully differential operational amplifier 3081 is configured to output a first signal S1. A non-inverting output end OUT+ of the fully differential operational amplifier 3081 is configured to output a second signal S2. A common-mode input end COM of the fully differential operational amplifier 3081 is configured to input a reference voltage Vref. The reference voltage Vref may be obtained through a reference signal generation circuit, and a structure of the reference signal generation circuit is not limited.

The second signal S2=Vref+A(Vbat1-Vbat2)/2 outputted by a non-inverting output end OUT+ of the fully differential operational amplifier 3081. A first signal S1=Vref-A(Vbat1-Vbat2)/2 outputted by an inverting output end OUT- of the fully differential operational amplifier 3081, where A is an amplification coefficient of the fully differential operational amplifier 3081. Particularly, for example, the first signal S1 and the second signal S2 are voltages. If Vbat1=Vbat2, there is S1=S2=Vref.

The fully differential operational amplifier 3081, the first operational amplifier 306, and the first adjustment transistor 302 form a negative feedback loop of the first operational amplifier 306, and the fully differential operational amplifier 3081, the second operational amplifier 307, and the second adjustment transistor 303 form a negative feedback loop of the second operational amplifier 307.

If Vbat1=Vbat2 (that is, in a balanced state), assuming that the first limit signal Slimit1 is greater than the first signal S1, the first operational amplifier 306 selects the first signal S1 and the first detection signal Ssns1 to perform differential operation, so as to output the first control voltage Vctrl1; and if the second limit signal Slimit2 is greater than the second signal S2, the second operational amplifier 307 selects the second signal S2 and the second detection signal Ssns2 to perform differential operation, so as to output the second control voltage Vctrl2. According to the voltage following principle of the negative feedback loop of the operational amplifier, in the balanced state, S1=Ssns1, and S2=Ssns2. S1=S2=Vref, Ssns1=Rsns1*Ichg1*A3, Ssns2=Rsns2*Ichg2*A4. Therefore, there is Vref=Rsns1*Ichg1*A3=Rsns2*Ichg2*A4, where A3 is an amplification coefficient of the third operational amplifier 309, and A4 is an amplification coefficient of the fourth operational amplifier 310.

Therefore, a magnitude of the reference voltage Vref may be determined based on the desired Ichg1, Rsns1, and A3 in the balanced state, or a magnitude of the reference voltage Vref may be determined based on the desired Ichg2, Rsns2, and A4 in the balanced state. Alternatively, the desired Ichg1 in the balanced state may be adjusted based on Rsns1, A3, and Vref, and the desired Ichg2 in the balanced state may be adjusted based on Rsns2, A4, and Vref.

It should be noted that, in a possible implementation, if A3=A4 and Rsns1=Rsns2, in a balanced state, there are Ichg1=Ichg2 and Vbat1=Vbat2. This may be applied to a scenario in which two batteries have the same capacity, so that the two batteries are charged with the same current and maintain the same voltage. In another possible implementation, because Rsns1*Ichg1*A3=Rsns2*Ichg2*A4 is always valid in a balanced state, if A3, A4, Rsns1, and Rsns2 are adjusted, Ichg1 and Ichg2 are different, Vbat1=Vbat2 can still be guaranteed. This may be applied to a scenario in which two batteries have different capacities, so that a charging current of a battery with a large capacity is larger, and voltages of the two batteries are still the same.

If Vbat1 and Vbat2 are different (that is, in an unbalanced state), for example, if Vbat2>Vbat1, the second signal S2 outputted by the non-inverting output end OUT+ of the fully differential operational amplifier 3081 is less than Vref, and the first signal S1 outputted by the inverting output end OUT- of the fully differential operational amplifier 3081 is larger than Vref, that is, S2<S1. According to the voltage following principle of the negative feedback loop of the operational amplifier, there is Ssns2<Ssns1. Therefore, the first charging current Ich1 proportional to the first detection signal Ssns1 increases, the second charging current Ich2 proportional to the second detection signal Ssns2 decreases, so that the first charging voltage Vbat1 increases more rapidly until it is restored to Vbat2=Vbat1, that is, it is restored to the balanced state.

It can be learned from the foregoing analysis that, for the charging circuit of the battery in FIG. 4, if voltages of the two batteries are equal, the first signal and the second signal outputted by the fully differential operational amplifier are equal, and according to a voltage following principle of the operational amplifier, the first detection signal and the second detection signal are equal. Therefore, the first charging current proportional to the first detection signal and the second charging current proportional to the second detection signal are balanced, so that the voltages of the two batteries are kept equal during charging. If the voltages of the two batteries are not equal, for example, if the second charging voltage is greater than the first charging voltage, the first signal outputted by the fully differential operational amplifier is greater than the second signal. According to a voltage following principle of the operational amplifier, the first detection signal is greater than the second detection signal. Therefore, the first charging current proportional to the first detection signal increases, and the second charging current proportional to the second detection signal decreases, so that the first charging voltage increases more rapidly until the two batteries restore to a same voltage for charging and simultaneously reach a charging stop state, and a charging time of the dual batteries is shortened. In addition, a voltage drop VDROP on the two regulation transistors may be minimized by keeping the voltages of the two batteries consistent, thereby improving charging efficiency.

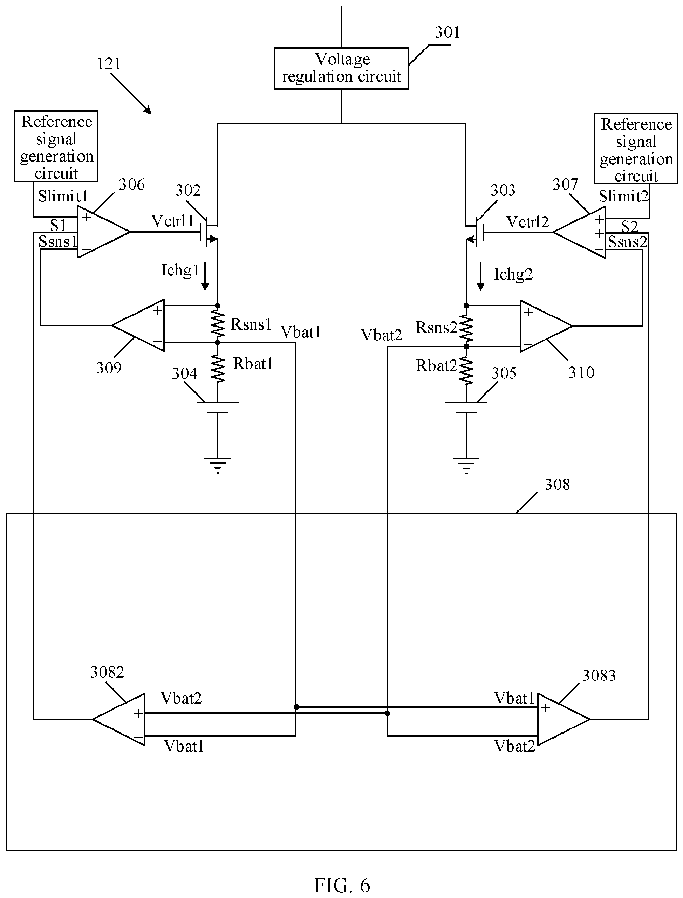

In another possible implementation, as shown in FIG. 6 to FIG. 10, the operational amplifier circuit 308 includes a fifth operational amplifier 3082 and a sixth operational amplifier 3083.

As shown in FIG. 6, the non-inverting input end of the fifth operational amplifier 3082 is configured to input the second charging voltage Vbat2, the inverting input end of the fifth operational amplifier 3082 is configured to input the first charging voltage Vbat1, and the output end of the fifth operational amplifier 3082 is configured to output the first signal S1. The non-inverting input end of the sixth operational amplifier 3083 is configured to input the first charging voltage Vbat1, the inverting input end of the sixth operational amplifier 3083 is configured to input the second charging voltage Vbat2, and the output end of the sixth operational amplifier 3083 is configured to output the second signal S2.

The fifth operational amplifier 3082, the first operational amplifier 306, and the first adjustment transistor 302 form a negative feedback loop of the first operational amplifier 306, and the sixth operational amplifier 3083, the second operational amplifier 307, and the second adjustment transistor 303 form a negative feedback loop of the second operational amplifier 307.

A working principle of the charging circuit 121 of the battery is as follows:

Assuming that amplification coefficients of the first operational amplifier 306 and the second operational amplifier 307 are the same, amplification coefficients of the third operational amplifier 309 and the fourth operational amplifier 310 are the same, and the first resistor Rsns1 and the second resistor Rsns2 are the same. For example, in an initial state, the first charging current Ichg1 and the second charging current Ichg2 are equal (for example, both are 1A), that is, the first detection signal Ssns1 proportional to the first charging current Ichg1 and the second detection signal Ssns2 proportional to the second charging current Ichg2 are equal.

If Vbat1=Vbat2 (that is, in the balanced state), that is, the voltage difference inputted by the fifth operational amplifier 3082 is zero, the first signal S1 outputted by the fifth operational amplifier 3082 is an uncertain constant value (which may be large or small). If the first signal S1 is a small constant value, and the first detection signal Ssns1 is also a small constant value according to the voltage following principle of the negative feedback loop of the operational amplifier, the first charging current Ichg1 is very small, and a charging time of the first battery 304 is prolonged. Similarly, if the second signal S2 is a small constant value, and the second detection signal Ssns2 proportional to the second charging current Ichg2 is also a small constant value according to the voltage following principle of the negative feedback loop, the second charging current Ichg2 is very small, and a charging time of the second battery 305 is prolonged.

If Vbat1 and Vbat2 are different (that is, in the unbalanced state), for example, if Vbat2>Vbat1, the first signal S1 outputted by the fifth operational amplifier 3082 increases. Because an input voltage of the non-inverting input end of the sixth operational amplifier 3083 is less than an input voltage of the inverting input end of the sixth operational amplifier 3083, the second signal S2 outputted by the sixth operational amplifier 3083 is a small constant value. According to the voltage following principle of the negative feedback loop of the operational amplifier, if the second detection signal Ssns2 proportional to the second charging current Ichg2 is also a small constant value, the second charging current Ichg2 is very small, and a charging time of the second battery 305 is prolonged. A difference between signals inputted at the non-inverting input end and the inverting input end of the first operational amplifier 306 is greater than a difference between signals inputted at the non-inverting input end and the inverting input end of the second operational amplifier 307, so that the first control voltage Vctrl1 outputted by the first operational amplifier 306 is greater than the second control voltage Vctrl1 outputted by the second operational amplifier 307. Therefore, the first charging current Ich1 flowing through the first adjustment transistor 302 is greater than the second charging current Ich2 flowing through the second adjustment transistor 303. The first charging voltage Vbat1 increases more rapidly until Vbat2=Vbat1, that is, the first charging voltage Vbat1 is restored to the balanced state, but the time may be very long due to the impact of the second battery 305.

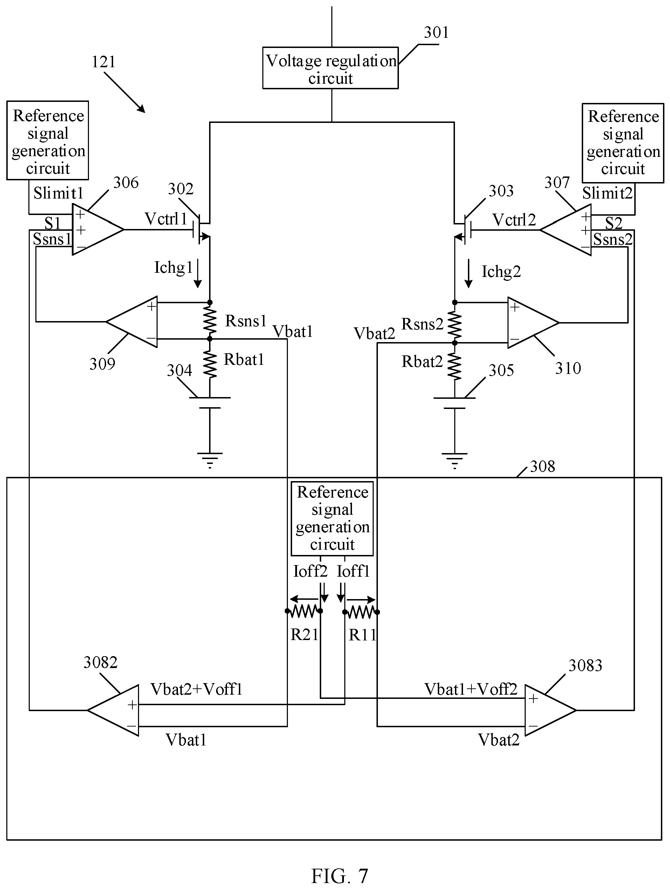

Therefore, to prevent a charging time from being prolonged because charging currents of the two batteries are too small in the balanced state, embodiments of this application provide an operational amplifier circuit 308 shown in FIG. 7 to FIG. 10. By adding a bias voltage to the voltage difference between the two batteries inputted by the fifth operational amplifier 3082 and the sixth operational amplifier 3083, even when the voltages of the two batteries are the same in the balanced state, the fifth operational amplifier 3082 and the sixth operational amplifier 3083 can still input a voltage difference of a magnitude of the bias voltage, so that the operational amplifier can be normally performed without outputting a small constant value. The voltage difference between the input voltages of the fifth operational amplifier 3082 and the input voltages of the sixth operational amplifier 3083 satisfies the following mathematical relationship:

The non-inverting input end of the fifth operational amplifier 3082 is configured to input the second charging voltage Vbat2 on the second charging path or the bias voltage of the second charging voltage Vbat2, the inverting input end of the fifth operational amplifier 3082 is configured to input the first charging voltage Vbat1 on the first charging path or the bias voltage of the first charging voltage Vbat1, and the output end of the fifth operational amplifier 3082 is configured to output the first signal S1.

The non-inverting input end of the sixth operational amplifier 3083 is configured to input the first charging voltage Vbat1 or the bias voltage of the first charging voltage Vbat1, the inverting input end of the sixth operational amplifier 3083 is configured to input the second charging voltage or the bias voltage of the second charging voltage, and the output end of the sixth operational amplifier 3083 is configured to output the second signal S2.

The circuit described above may be implemented in a variety of implementations:

In a possible implementation, as shown in FIG. 7, the non-inverting input end of the fifth operational amplifier 3082 is configured to input the second charging voltage Vbat2 plus the first bias voltage Voff1, and the inverting input end of the fifth operational amplifier 3082 is configured to input the first charging voltage Vbat1, and the output end of the fifth operational amplifier 3082 is configured to output the first control voltage Vctrl1. The non-inverting input end of the sixth operational amplifier 3083 is configured to input the first charging voltage Vbat1 plus the second bias voltage Voff2, the inverting input end of the sixth operational amplifier 3083 is configured to input the second charging voltage Vbat2, and the output end of the sixth operational amplifier 3083 is configured to output the second control voltage Vctrl2.

The fifth operational amplifier 3082, the first operational amplifier 306, and the first adjustment transistor 302 form a negative feedback loop of the first operational amplifier 306, and the sixth operational amplifier 3083, the second operational amplifier 307, and the second adjustment transistor 303 form a negative feedback loop of the second operational amplifier 307.

If Vbat1=Vbat2 (that is, in a balanced state), assuming that the first limit signal Slimit1 is greater than the first signal S1, the first operational amplifier 306 selects the first signal S1 and the first detection signal Ssns1 to perform differential operation, so as to output the first control voltage Vctrl1. The second limit signal Slimit2 is greater than a signal outputted by the second operational amplifier 307, and the second operational amplifier 307 selects the second signal S2 and the second detection signal Ssns2 to perform differential operation, so as to output the second control voltage Vctrl2. According to the voltage following principle of the negative feedback loop of the operational amplifier, in the balanced state, S1=Ssns1=Rsns1*Ichg1*A3, S2=Ssns2=Rsns2*Ichg2*A4, S1=A5*Voff1, and S2=A6*Voff2. Therefore, there are A5*Voff1=Rsns1*Ichg1*A3, and A6*Voff2=Rsns2*Ichg2*A4. A3 is an amplification coefficient of the third operational amplifier 309, A4 is an amplification coefficient of the fourth operational amplifier 310, A5 is an amplification coefficient of the fifth operational amplifier 3082, and A6 is an amplification coefficient of the sixth operational amplifier 3083.

Therefore, Rsns1, A3, A5, and Voff1 may be determined based on the desired Ichg1 in the balanced, and Rsns2, A4, A6, and Voff2 may be determined based on the desired Ichg2 in the balanced state. Alternatively, the desired Ichg1 in the balanced state may be adjusted based on Rsns1, A3, A5, and Voff1, and the desired Ichg2 in the balanced state may be adjusted based on Rsns2, A4, A6, and Voff2.

It should be noted that, in a possible implementation, if A3=A4, Rsns1=Rsns2, A5=A6, and Voff1=Voff2, there are Ichg1=Ichg2 and Vbat1=Vbat2 in the balanced state. This may be applied to a scenario in which two batteries have the same capacity, so that the two batteries are charged with the same current and maintain the same voltage. In another possible implementation, if Ichg1 and Ichg2 are different by adjusting A3, A4, Rsns1, Rsns2, A5, A6, Voff1, and Voff2, Vbat1=Vbat2 can still be guaranteed. This may be applied to a scenario in which two batteries have different capacities, so that a charging current of a battery with a large capacity is larger, and voltages of the two batteries are still the same.

If Vbat1 and Vbat2 are different (that is, in the unbalanced state), for example, if Vbat2+Voffl<Vbat1, that is, a voltage input at the non-inverting input end of the fifth operational amplifier 3082 is less than a voltage input at the inverting input end of the fifth operational amplifier 3082, the first signal S1 outputted by the fifth operational amplifier 3082 is a small constant value. According to the voltage following principle of the negative feedback loop of the operational amplifier, the first detection signal Ssns1 proportional to the first charging current Ichg1 is also a small constant value. Therefore, the first charging current Ichg1 is very small, and a voltage boost of the first battery 304 is very slow. The voltage difference between the non-inverting input end and the inverting input end of the sixth operational amplifier 3083 is Vbat1+Voff2-Vbat2>Vbat2+Voff1+Voff2-Vbat2=Voff1+Voff2, so that the second signal S2 outputted by the sixth operational amplifier 3083 increases. According to a voltage following principle of a negative feedback loop of the operational amplifier, the second detection signal Ssns2 proportional to the second charging current Ichg2 also increases. Therefore, the second charging current Ichg2 is greater than the first charging current Ich1, so that the second charging voltage Vbat2 increases more rapidly until Vbat2=Vbat1.

If Vbat1=Vbat2 (that is, in the balanced state), assuming that the first limit signal Slimit1 is less than the first signal S1, the first operational amplifier 306 selects the first limit signal Slimit1 and the first detection signal Ssns1 to perform differential operation, so as to output the first control voltage Vctrl1. The second limit signal Slimit2 is less than the second signal S2, and the second operational amplifier 307 selects the second limit signal Slimit2 and the second detection signal Ssns2 to perform differential operation, so as to output the second control voltage Vctrl2. According to the voltage following principle of the negative feedback loop of the operational amplifier, in the balanced state, Slimit1=Ssns1=Rsns1*Ichg1*A3, and Slimit2=Ssns2=Rsns2*Ichg2*A4. A3 is an amplification coefficient of the third operational amplifier 309, and A4 is an amplification coefficient of the fourth operational amplifier 310.

Therefore, Rsns1, A3, and Slimit1 may be determined based on the desired Ichg1 in the balanced state, and Rsns2, A4, and Slimit2 may be determined based on the desired Ichg2 in the balanced state. Alternatively, the desired Ichg1 in the balanced state may be adjusted based on Rsns1,A3, and Slimit1, and the desired Ichg2 in the balanced state may be adjusted based on Rsns2, A4, and Slimit2.

It should be noted that, in a possible implementation, if A3=A4, Rsns1=Rsns2, and Slimit1=Slimit2, there are Ichg1=Ichg2 and Vbat1=Vbat2 in the balanced state. This may be applied to a scenario in which two batteries have the same capacity, so that the two batteries are charged with the same current and maintain the same voltage. In another possible implementation, if Ichg1 is different from Ichg2 by adjusting A3, A4, Rsns1, Rsns2, Slimit1, and Slimit2, Vbat1=Vbat2 can still be guaranteed. This may be applied to a scenario in which two batteries have different capacities, so that a charging current of a battery with a large capacity is larger, and voltages of the two batteries are still the same.

If Vbat1 and Vbat2 are different (that is, in the unbalanced state), for example, if Vbat2+Voff1<Vbat1, that is, a voltage input at the non-inverting input end of the fifth operational amplifier 3082 is less than a voltage input at the inverting input end of the fifth operational amplifier 3082, the first signal S1 outputted by the fifth operational amplifier 3082 is a small constant value. According to the voltage following principle of the negative feedback loop of the operational amplifier, the second detection signal Ssns2 proportional to the second charging current Ichg2 is also a small constant value. Therefore, the second charging current Ichg2 is very small, and a voltage boost of the first battery 304 is very slow. The voltage difference between the non-inverting input end and the inverting input end of the sixth operational amplifier 3083 is Vbat1+Voff2-Vbat2>Vbat2+Voff1+Voff2-Vbat2=Voff1+Voff2, so that the second signal S2 outputted by the sixth operational amplifier 3083 increases. However, because the second operational amplifier 307 still selects the second limit signal Slimit2 and the second detection signal Ssns2 to perform differential operation, the increase of the second signal S2 has no impact. According to the voltage following principle of the negative feedback loop of the operational amplifier, the second detection signal Ssns2 still follows the second limit signal Slimit2, so that the second charging current Ichg2 remains unchanged. Therefore, the second charging current Ichg2 is still greater than the first charging current Ich1, so that the second charging voltage Vbat2 increases more rapidly until Vbat2=Vbat1.

The first bias voltage Voff1 depends on an offset voltage Vos1 of the first operational amplifier 306, |Vos1|<=Voff1<=|Vos1|+ΔV1, where ΔV1 may generally be several millivolts. Similarly, the second bias voltage Voff2 depends on an offset voltage Vos2 of the second operational amplifier 307, |Vos2|<=Voff2<=|Vos1|+ΔV2, where ΔV2 may generally be several millivolts. When the first operational amplifier 306 and the second operational amplifier 307 are the same, the first bias voltage Voff1 may be equal to the second bias voltage Voff2, for example, both are 15 mV.

A manner of obtaining the first bias voltage Voff1 and the second bias voltage Voff2 is not limited in this application. For example, as shown in FIG. 7, a positive electrode of the second battery 305 may be coupled to a reference current generation circuit through a resistor R11, and the non-inverting input end of the fifth operational amplifier 3082 is coupled between the resistor R11 and the reference current generation circuit. The reference current generation circuit generates a constant current Ioff1 flowing through the resistor R11, and then the first bias voltage Voff1=R11*Ioff1. A positive electrode of the first battery 304 may be coupled to the reference current generation circuit through a resistor R21, and the non-inverting input end of the sixth operational amplifier 3083 is coupled between the resistor R21 and the reference current generation circuit. The reference current generation circuit generates a constant current Ioff2 flowing through the resistor R21, and then the second bias voltage Voff2=R21*Ioff2.

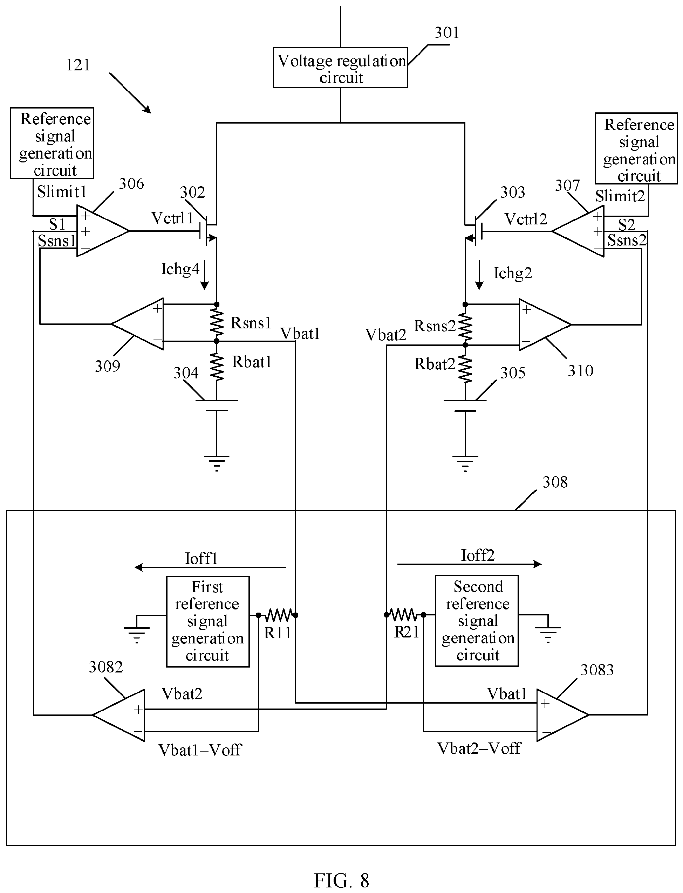

In a possible implementation, as shown in FIG. 8, the non-inverting input end of the fifth operational amplifier 3082 is configured to input the second charging voltage Vbat2, the inverting input end of the fifth operational amplifier 3082 is configured to input the first charging voltage Vbat1 minus the first bias voltage Voff1, and the output end of the fifth operational amplifier 3082 is configured to output the first control voltage Vctrl1. The non-inverting input end of the sixth operational amplifier 3083 is configured to input the first charging voltage Vbat1, the inverting input end of the sixth operational amplifier 3083 is configured to input the second charging voltage Vbat2 minus the second bias voltage Voff2, and the output end of the sixth operational amplifier 3083 is configured to output the second control voltage Vctrl2.

A difference between the circuits shown in FIG. 8 and FIG. 7 lies in a manner of obtaining the first bias voltage Voff1 and the second bias voltage Voff2. For other content, refer to FIG. 7. As shown in FIG. 8, the positive electrode of the first battery 304 may be coupled to a first reference current generation circuit through the resistor R11, the inverting input end of the fifth operational amplifier 3082 is coupled between the resistor R11 and the first reference current generation circuit, and the first reference current generation circuit is further grounded. The first reference current generation circuit generates the constant current Ioff1 flowing through the resistor R11, and then the first bias voltage Voff1=R11*Ioff1. The positive electrode of the second battery 305 may be coupled to a second reference current generation circuit through the resistor R21, the inverting input end of the sixth operational amplifier 3083 is coupled between the resistor R21 and the second reference current generation circuit, and the second reference current generation circuit is further grounded. The second reference current generation circuit generates the constant current Ioff2 flowing through the resistor R21, and then the second bias voltage Voff2=R21*Ioff2.

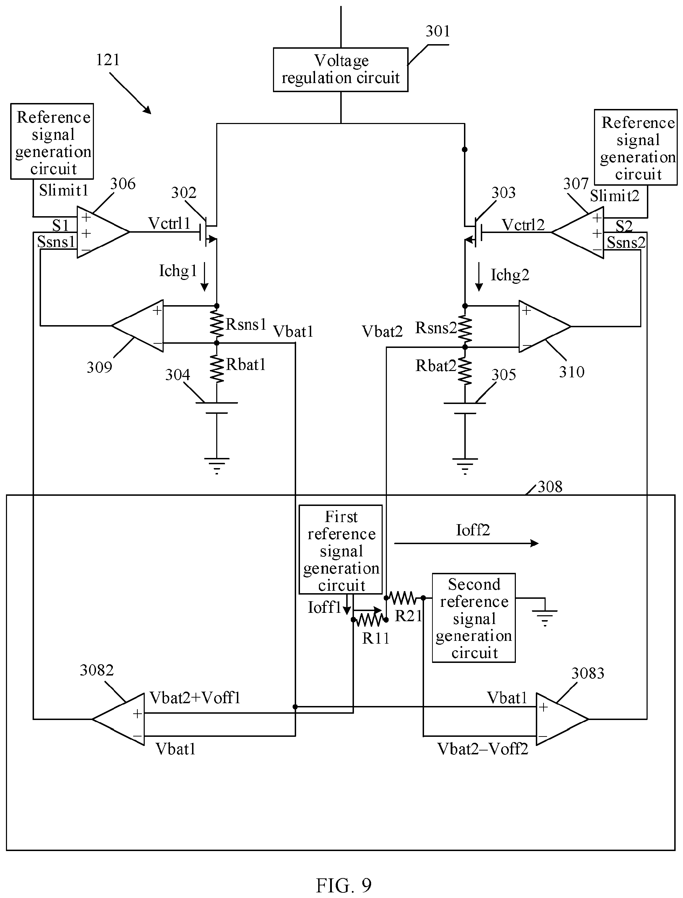

In a possible implementation, as shown in FIG. 9, the non-inverting input end of the fifth operational amplifier 3082 is configured to input the second charging voltage Vbat2 plus the first bias voltage Voff1, and the inverting input end of the fifth operational amplifier 3082 is configured to input the first charging voltage Vbat1, and the output end of the fifth operational amplifier 3082 is configured to output the first control voltage Vctrl1. The non-inverting input end of the sixth operational amplifier 3083 is configured to input the first charging voltage Vbat1, the inverting input end of the sixth operational amplifier 3083 is configured to input the second charging voltage Vbat2 minus the second bias voltage Voff2, and the output end of the sixth operational amplifier 3083 is configured to output the second control voltage Vctrl2.

A difference between the circuits shown in FIG. 9 and FIG. 7 lies in a manner of obtaining the first bias voltage Voff1 and the second bias voltage Voff2. For other content, refer to FIG. 7. As shown in FIG. 9, a positive electrode of the second battery 305 may be coupled to a first reference current generation circuit through a resistor R11, and the non-inverting input end of the fifth operational amplifier 3082 is coupled between the resistor R11 and the first reference current generation circuit. The first reference current generation circuit generates the constant current Ioff1 flowing through the resistor R11, and then the first bias voltage Voff1=R11*Ioff1. The positive electrode of the second battery 305 may be coupled to a second reference current generation circuit through the resistor R21, the inverting input end of the sixth operational amplifier 3083 is coupled between the resistor R21 and the second reference current generation circuit, and the second reference current generation circuit is further grounded. The second reference current generation circuit generates the constant current Ioff2 flowing through the resistor R21, and then the second bias voltage Voff2=R21*Ioff2.

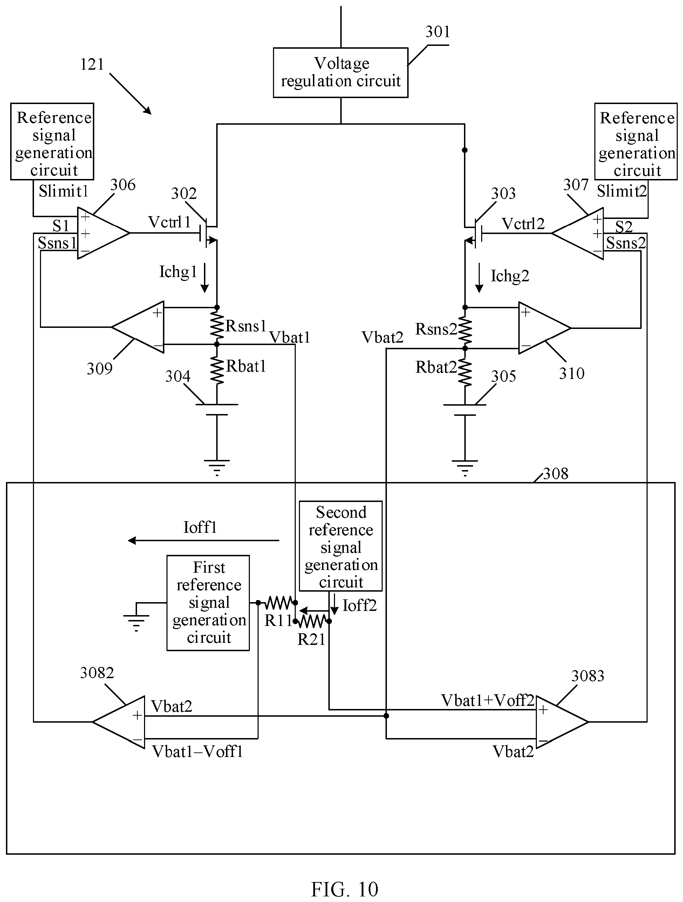

In a possible implementation, as shown in FIG. 10, the non-inverting input end of the fifth operational amplifier 3082 is configured to input the second charging voltage Vbat2, the inverting input end of the fifth operational amplifier 3082 is configured to input the first charging voltage Vbat1 minus the first bias voltage Voff1, and the output end of the fifth operational amplifier 3082 is configured to output the first control voltage Vctrl1. The non-inverting input end of the sixth operational amplifier 3083 is configured to input the first charging voltage Vbat1 plus the second bias voltage Voff2, the inverting input end of the sixth operational amplifier 3083 is configured to input the second charging voltage Vbat2, and the output end of the sixth operational amplifier 3083 is configured to output the second control voltage Vctrl2.

A difference between the circuits shown in FIG. 10 and FIG. 7 lies in a manner of obtaining the first bias voltage Voff1 and the second bias voltage Voff2. For other content, refer to FIG. 7. As shown in FIG. 10, the positive electrode of the first battery 304 may be coupled to a first reference current generation circuit through the resistor R11, the inverting input end of the fifth operational amplifier 3082 is coupled between the resistor R11 and the first reference current generation circuit, and the first reference current generation circuit is further grounded. The first reference current generation circuit generates the constant current Ioff1 flowing through the resistor R11, and then the first bias voltage Voffl=R11*Ioffl. A positive electrode of the second battery 305 may be coupled to a second reference current generation circuit through a resistor R21. The non-inverting input end of the sixth operational amplifier 3083 is coupled between the resistor R21 and the second reference current generation circuit. The second reference current generation circuit generates a constant current Ioff2 flowing through the resistor R21, and then the second bias voltage Voff2=R21*Ioff2.

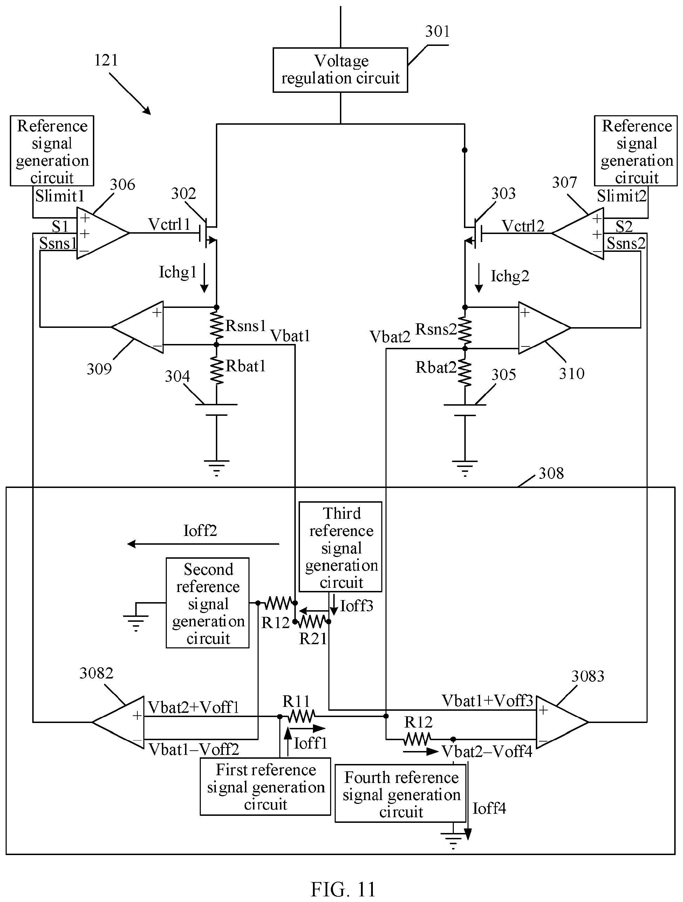

In a possible implementation, as shown in FIG. 11, the non-inverting input end of the fifth operational amplifier 3082 is configured to input the second charging voltage Vbat2 plus the first bias voltage Voff1, the inverting input end of the fifth operational amplifier 3082 is configured to input the first charging voltage Vbat1 minus the second bias voltage Voff2, and the output end of the fifth operational amplifier 3082 is configured to output the first control voltage Vctrl1. The non-inverting input end of the sixth operational amplifier 3083 is configured to input the first charging voltage Vbat1 plus a third bias voltage Voff3, the inverting input end of the sixth operational amplifier 3083 is configured to input the second charging voltage Vbat2 minus a fourth bias voltage Voff4, and the output end of the sixth operational amplifier 3083 is configured to output the second control voltage Vctrl2.

A difference between the circuits shown in FIG. 11 and FIG. 7 lies in a manner of obtaining the first bias voltage Voff1, the second bias voltage Voff2, the third bias voltage Voff3, and the fourth bias voltage Voff4. For other content, refer to FIG. 7. As shown in FIG. 11, a positive electrode of the second battery 305 may be coupled to a first reference current generation circuit and the non-inverting input end of the fifth operational amplifier 3082 through a resistor R11. A positive electrode of the first battery 304 may be coupled to a second reference current generation current and the inverting input of the fifth operational amplifier 3082 by a resistor R12. The positive electrode of the first battery 304 may be coupled to a third reference current generation circuit and the non-inverting input end of the sixth operational amplifier 3083 through the resistor R21, and the positive electrode of the second battery 305 may be coupled to a fourth reference current generation circuit and the inverting input end of the sixth operational amplifier 3083 through the resistor R22. The second reference current generation circuit and the fourth reference current generation circuit are further grounded. The first reference current generation circuit generates a constant current Ioff1 flowing through the resistor R11, and then the first bias voltage Voff1=R11*Ioff1. The second reference current generation circuit generates a constant current Ioff2 flowing through the resistor R12, and then the second bias voltage Voff2=R12*Ioff2. The third reference current generation circuit generates a constant current Ioff3 flowing through the resistor R21, and then the third bias voltage Voff3=R21*Ioff3. The fourth reference current generation circuit generates a constant current Ioff4 flowing through the resistor R22, and then the fourth bias voltage Voff4=R22*Ioff4.

It can be learned from the foregoing analysis that, for the charging circuit of the battery in FIG. 7 to FIG. 10, if the voltages of the two batteries are not equal, for example, if the first charging voltage is greater than the second charging voltage plus the first bias voltage, the first signal outputted by the fifth operational amplifier is a small constant value. According to the voltage following principle of the negative feedback loop of the operational amplifier, the first detection signal is also a small constant value. Therefore, the first charging current proportional to the first detection signal is also very small. The second signal outputted by the sixth operational amplifier increases. According to a voltage following principle of a negative feedback loop of the operational amplifier, the second detection signal also increases, and the second charging current proportional to the second detection signal also increases, so that the second charging voltage increases more rapidly until the two batteries restore to the same voltage for charging and simultaneously reach a charging stop state, and a charging time of the dual batteries is shortened. In addition, a voltage drop VDROP on the two regulation transistors may be minimized by keeping the voltages of the two batteries consistent, thereby improving charging efficiency.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions.

## Claims

1. A charging circuit (121) for charging a first and a second battery (304, 305), comprising: a voltage regulation circuit (301), a first adjustment transistor (302), a second adjustment transistor (303), a first operational amplifier (306), a second operational amplifier (307), and a fully differential operational amplifier (3081), wherein
the voltage regulation circuit (301) is configured to provide a first charging current to a first charging path through the first adjustment transistor (302) for charging the first battery (304),
and is further configured to provide a second charging current to a second charging path through the second adjustment transistor (303) for charging the second battery (305);
a non-inverting input end of the fully differential operational amplifier (3081) is configured to receive a first charging voltage from the first charging path, an inverting input end of the fully differential operational amplifier (3081) is configured to receive a second charging voltage from the second charging path, an inverting output end of the fully differential operational amplifier (3081) is configured to output a first signal, and a non-inverting output end of the fully differential operational amplifier (3081) is configured to output a second signal,
a first non-inverting input end of the first operational amplifier (306) is configured to receive the first signal, an inverting input end of the first operational amplifier (306) is configured to receive a first detection signal proportional to the first charging current, and the first operational amplifier (306) is further configured to output a first control voltage to a gate of the first adjustment transistor (302) to adjust the first charging current; and
a first non-inverting input end of the second operational amplifier (307) is configured to receive the second signal, an inverting input end of the second operational amplifier (307) is configured to receive a second detection signal proportional to the second charging current, and the second operational amplifier (307) is further configured to output a second control voltage to a gate of the second adjustment transistor (303) to adjust the second charging current.

2. The charging circuit (121) according to claim 1, wherein
the first operational amplifier (306) further comprises a second non-inverting input end, wherein the second non-inverting input end of the first operational amplifier (306) is configured to receive a first limit signal, and the first operational amplifier (306) is further configured to: select a smaller value between the first limit signal and the first signal, and perform differential amplification on the first detection signal to output the first control voltage.

3. The charging circuit (121) according to claim 1 or 2, wherein
the second operational amplifier (307) further comprises a second non-inverting input end, wherein the second non-inverting input end of the second operational amplifier (307) is configured to receive a second limit signal, and the second operational amplifier (307) is further configured to: select a smaller value between the second limit signal and the second signal, and perform differential amplification on the second detection signal to output the second control voltage.

4. The charging circuit (121) according to any one of claims 1 to 3, further comprising: a third operational amplifier (309) and a first resistor (Rsns1), wherein the first resistor (Rsns1) is disposed on a path of the first charging current, a non-inverting input end of the third operational amplifier (309) is coupled to an end with a higher voltage of the first resistor (Rsns1), an inverting input end of the third operational amplifier (309) is coupled to an end with a lower voltage of the first resistor (Rsns1), and an output end of the third operational amplifier (309) is coupled to the inverting input end of the first operational amplifier (306).

5. The charging circuit (121) according to any one of claims 1 to 4, further comprising: a fourth operational amplifier (310) and a second resistor (Rsns2), wherein the second resistor (Rsns2) is disposed on a path of the second charging current, a non-inverting input end of the fourth operational amplifier (310) is coupled to an end with a higher voltage of the second resistor (Rsns2), an inverting input end of the fourth operational amplifier (310) is coupled to an end with a lower voltage of the second resistor (Rsns2), and an output end of the fourth operational amplifier is coupled to the inverting input end of the second operational amplifier (310).

6. A charging circuit (121) for charging a first and a second battery (304, 305), comprising: a voltage regulation circuit (301), a first adjustment transistor (302), a second adjustment transistor (303), a first operational amplifier (306), a second operational amplifier (307), a fifth operational amplifier (3082), and a sixth operational amplifier (3083), wherein
the voltage regulation circuit (301) is configured to provide a first charging current to a first charging path through the first adjustment transistor (302) for charging the first battery (304), and is further configured to provide a second charging current to a second charging path through the second adjustment transistor (303) for charging the second battery (305);
a non-inverting input end of the fifth operational amplifier (3082) is configured to receive a second charging voltage from the second charging path or a bias voltage of the second charging voltage, an inverting input end of the fifth operational amplifier (3082) is configured to receive a first charging voltage from the first charging path or a bias voltage of the first charging voltage, and an output end of the fifth operational amplifier (3082) is configured to output a first signal,
a non-inverting input end of the sixth operational amplifier (3083) is configured to receive the first charging voltage or the bias voltage of the first charging voltage, an inverting input end of the sixth operational amplifier (3083) is configured to receive the second charging voltage or the bias voltage of the second charging voltage, and an output end of the sixth operational amplifier (3083) is configured to output a second signal,
a first non-inverting input end of the first operational amplifier (306) is configured to receive the first signal, an inverting input end of the first operational amplifier (306) is configured to receive a first detection signal proportional to the first charging current, and the first operational amplifier (306) is further configured to output a first control voltage to a gate of the first adjustment transistor (302) to adjust the first charging current; and
a first non-inverting input end of the second operational amplifier (307) is configured to receive the second signal, an inverting input end of the second operational amplifier (307) is configured to receive a second detection signal proportional to the second charging current, and the first operational amplifier (306) is further configured to output a second control voltage to a gate of the second adjustment transistor (303) to adjust the second charging current.

7. The charging circuit (121) according to claim 6, wherein
the non-inverting input end of the fifth operational amplifier (306) is configured to receive the second charging voltage plus a first bias voltage, and the inverting input end of the fifth operational amplifier (3082) is configured to receive the first charging voltage.

8. The charging circuit (121) according to claim 6, wherein
the non-inverting input end of the fifth operational amplifier (3082) is configured to receive the second charging voltage, and the inverting input end of the fifth operational amplifier (3082) is configured to receive the first charging voltage minus a first bias voltage.

9. The charging circuit (121) according to any one of claims 6 to 8, wherein
the non-inverting input end of the sixth operational amplifier (3083) is configured to receive the first charging voltage plus a second bias voltage, and the inverting input end of the sixth operational amplifier (3083) is configured to receive the second charging voltage.

10. The charging circuit (121) according to any one of claims 6 to 8, wherein
the non-inverting input end of the sixth operational amplifier (3083) is configured to receive the first charging voltage, and the inverting input end of the sixth operational amplifier (3083) is configured to receive the second charging voltage minus a second bias voltage.

11. The charging circuit (121) according to any one of claims 6 to 10, wherein
the first operational amplifier (306) further comprises a second non-inverting input end, wherein the second non-inverting input end of the first operational amplifier (306) is configured to receive a first limit signal, and the first operational amplifier (306) is further configured to: select a smaller value between the first limit signal and the first signal, and perform differential amplification on the first detection signal to output the first control voltage.

12. The charging circuit (121) according to any one of claims 6 to 11, wherein
the second operational amplifier (307) further comprises a second non-inverting input end, wherein the second non-inverting input end of the second operational amplifier (307) is configured to receive a second limit signal, and the second operational amplifier (307) is further configured to: select a smaller value between the second limit signal and the second signal, and perform differential amplification on the second detection signal to output the second control voltage.

13. The charging circuit (121) according to any one of claims 6 to 12, further comprising: a third operational amplifier (309) and a first resistor (Rsns1), wherein the first resistor (Rsns1) is disposed on a path of the first charging current, a non-inverting input end of the third operational amplifier (309) is coupled to an end with a higher voltage of the first resistor (Rsns1), an inverting input end of the third operational amplifier (309) is coupled to an end with a lower voltage of the first resistor (Rsns1), and an output end of the third operational amplifier (309) is coupled to the inverting input end of the first operational amplifier (306).

14. The charging circuit (121) according to any one of claims 6 to 13, further comprising: a fourth operational amplifier (310) and a second resistor (Rsns2), wherein the second resistor (Rsns2) is disposed on a path of the second charging current, a non-inverting input end of the fourth operational amplifier (310) is coupled to an end with a higher voltage of the second resistor (Rsns2), an inverting input end of the fourth operational amplifier (310) is coupled to an end with a lower voltage of the second resistor (Rsns2), and an output end of the fourth operational amplifier (310) is coupled to the inverting input end of the second operational amplifier (307).

15. An electronic device (12), comprising a first and a second battery, and further comprising the charging circuit (121) for charging the first and the second battery according to any one of claims 1 to 14.

## Patentansprüche

1. Ladeschaltung (121) zum Laden eines ersten und eines zweiten Akkus (304, 305), die umfasst: eine Spannungsregelschaltung (301), einen ersten Einstelltransistor (302), einen zweiten Einstelltransistor (303), einen ersten Operationsverstärker (306), einen zweiten Operationsverstärker (307) und einen volldifferenziellen Operationsverstärker (3081), wobei
die Spannungsregelschaltung (301) konfiguriert ist, um einen ersten Ladestrom an einen ersten Ladepfad durch den ersten Einstelltransistor (302) zum Laden des ersten Akkus (304) bereitzustellen, und ferner konfiguriert ist, um einen zweiten Ladestrom an einen zweiten Ladepfad durch den zweiten Einstelltransistor (303) zum Laden des zweiten Akkus (305) bereitzustellen;
ein nichtinvertierendes Eingangsende des volldifferenziellen Operationsverstärkers (3081) konfiguriert ist, um eine erste Ladespannung von dem ersten Ladepfad zu empfangen, ein invertierendes Eingangsende des volldifferenziellen Operationsverstärkers (3081) konfiguriert ist, um eine zweite Ladespannung von dem zweiten Ladepfad zu empfangen, ein invertierendes Ausgangsende des volldifferenziellen Operationsverstärkers (3081) konfiguriert ist, um ein erstes Signal auszugeben, und ein nichtinvertierendes Ausgangsende des volldifferenziellen Operationsverstärkers (3081) konfiguriert ist, um ein zweites Signal auszugeben;
ein erstes nichtinvertierendes Eingangsende des ersten Operationsverstärkers (306) konfiguriert ist, um das erste Signal zu empfangen, ein invertierendes Eingangsende des ersten Operationsverstärkers (306) konfiguriert ist, um ein erstes Detektionssignal proportional zu dem ersten Ladestrom zu empfangen, und der erste Operationsverstärker (306) ferner konfiguriert ist, um eine erste Steuerspannung an ein Gate des ersten Einstelltransistors (302) auszugeben, um den ersten Ladestrom einzustellen; und
ein erstes nichtinvertierendes Eingangsende des zweiten Operationsverstärkers (307) konfiguriert ist, um das zweite Signal zu empfangen, ein invertierendes Eingangsende des zweiten Operationsverstärkers (307) konfiguriert ist, um ein zweites Detektionssignal proportional zu dem zweiten Ladestrom zu empfangen, und der zweite Operationsverstärker (307) ferner konfiguriert ist, um eine zweite Steuerspannung an ein Gate des zweiten Einstelltransistors (303) auszugeben, um den zweiten Ladestrom einzustellen.

2. Ladeschaltung (121) nach Anspruch 1, wobei
der erste Operationsverstärker (306) ferner ein zweites nichtinvertierendes Eingangsende umfasst, wobei das zweite nichtinvertierende Eingangsende des ersten Operationsverstärkers (306) konfiguriert ist, um ein erstes Grenzwertsignal zu empfangen, und der erste Operationsverstärker (306) ferner konfiguriert ist zum: Auswählen eines kleineren Werts zwischen dem ersten Grenzwertsignal und dem ersten Signal und Durchführen einer Differenzverstärkung an dem ersten Detektionssignal, um die erste Steuerspannung auszugeben.

3. Ladeschaltung (121) nach Anspruch 1 oder 2, wobei
der zweite Operationsverstärker (307) ferner ein zweites nichtinvertierendes Eingangsende umfasst, wobei das zweite nichtinvertierende Eingangsende des zweiten Operationsverstärkers (307) konfiguriert ist, um ein zweites Grenzwertsignal zu empfangen, und der zweite Operationsverstärker (307) ferner konfiguriert ist zum: Auswählen eines kleineren Werts zwischen dem zweiten Grenzwertsignal und dem zweiten Signal und Durchführen der Differenzverstärkung an dem zweiten Detektionssignal, um die zweite Steuerspannung auszugeben.

4. Ladeschaltung (121) nach einem der Ansprüche 1 bis 3, die ferner umfasst: einen dritten Operationsverstärker (309) und einen ersten Widerstand (Rsns1), wobei der erste Widerstand (Rsns1) auf einem Pfad des ersten Ladestroms angeordnet ist, ein nichtinvertierendes Eingangsende des dritten Operationsverstärkers (309) an ein Ende mit einer höheren Spannung des ersten Widerstands (Rsns1) gekoppelt ist, ein invertierendes Eingangsende des dritten Operationsverstärkers (309) an ein Ende mit einer niedrigeren Spannung des ersten Widerstands (Rsns1) gekoppelt ist und ein Ausgangsende des dritten Operationsverstärkers (309) an das invertierende Eingangsende des ersten Operationsverstärkers (306) gekoppelt ist.

5. Ladeschaltung (121) nach einem der Ansprüche 1 bis 4, die ferner umfasst: einen vierten Operationsverstärker (310) und einen zweiten Widerstand (Rsns2), wobei der zweite Widerstand (Rsns2) auf einem Pfad des zweiten Ladestroms angeordnet ist, ein nichtinvertierendes Eingangsende des vierten Operationsverstärkers (310) an ein Ende mit einer höheren Spannung des zweiten Widerstands (Rsns2) gekoppelt ist, ein invertierendes Eingangsende des vierten Operationsverstärkers (310) an ein Ende mit einer niedrigeren Spannung des zweiten Widerstands (Rsns2) gekoppelt ist, und ein Ausgangsende des vierten Operationsverstärkers an das invertierende Eingangsende des zweiten Operationsverstärkers (310) gekoppelt ist.

6. Ladeschaltung (121) zum Laden eines ersten und eines zweiten Akkus (304, 305), die umfasst: eine Spannungsregelschaltung (301), einen ersten Einstelltransistor (302), einen zweiten Einstelltransistor (303), einen ersten Operationsverstärker (306), einen zweiten Operationsverstärker (307), einen fünften Operationsverstärker (3082) und einen sechsten Operationsverstärker (3083), wobei
die Spannungsregelschaltung (301) konfiguriert ist, um einen ersten Ladestrom an einen ersten Ladepfad durch den ersten Einstelltransistor (302) zum Laden des ersten Akkus (304) bereitzustellen, und ferner konfiguriert ist, um einen zweiten Ladestrom an einen zweiten Ladepfad durch den zweiten Einstelltransistor (303) zum Laden des zweiten Akkus (305) bereitzustellen;
ein nichtinvertierendes Eingangsende des fünften Operationsverstärkers (3082) konfiguriert ist, um eine zweite Ladespannung von dem zweiten Ladepfad oder eine Vorspannung der zweiten Ladespannung zu empfangen, ein invertierendes Eingangsende des fünften Operationsverstärkers (3082) konfiguriert ist, um eine erste Ladespannung von dem ersten Ladepfad oder eine Vorspannung der ersten Ladespannung zu empfangen, und ein Ausgangsende des fünften Operationsverstärkers (3082) konfiguriert ist, um ein erstes Signal auszugeben;
ein nichtinvertierendes Eingangsende des sechsten Operationsverstärkers (3083) konfiguriert ist, um die erste Ladespannung oder die Vorspannung der ersten Ladespannung zu empfangen, ein invertierendes Eingangsende des sechsten Operationsverstärkers (3083) konfiguriert ist, um die zweite Ladespannung oder die Vorspannung der zweiten Ladespannung zu empfangen, und ein Ausgangsende des sechsten Operationsverstärkers (3083) konfiguriert ist, um ein zweites Signal auszugeben; ein erstes nichtinvertierendes Eingangsende des ersten Operationsverstärkers (306) konfiguriert ist, um das erste Signal zu empfangen, ein invertierendes Eingangsende des ersten Operationsverstärkers (306) konfiguriert ist, um ein erstes Detektionssignal proportional zu dem ersten Ladestrom zu empfangen, und der erste Operationsverstärker (306) ferner konfiguriert ist, um eine erste Steuerspannung an ein Gate des ersten Einstelltransistors (302) auszugeben, um den ersten Ladestrom einzustellen; und
ein erstes nichtinvertierendes Eingangsende des zweiten Operationsverstärkers (307) konfiguriert ist, um das zweite Signal zu empfangen, ein invertierendes Eingangsende des zweiten Operationsverstärkers (307) konfiguriert ist, um ein zweites Detektionssignal proportional zu dem zweiten Ladestrom zu empfangen, und der erste Operationsverstärker (306) ferner konfiguriert ist, um eine zweite Steuerspannung an ein Gate des zweiten Einstelltransistors (303) auszugeben, um den zweiten Ladestrom einzustellen.

7. Ladeschaltung (121) nach Anspruch 6, wobei
das nichtinvertierende Eingangsende des fünften Operationsverstärkers (306) konfiguriert ist, um die zweite Ladespannung zuzüglich einer ersten Vorspannung zu empfangen, und das invertierende Eingangsende des fünften Operationsverstärkers (3082) konfiguriert ist, um die erste Ladespannung zu empfangen.

8. Ladeschaltung (121) nach Anspruch 6, wobei
das nichtinvertierende Eingangsende des fünften Operationsverstärkers (3082) konfiguriert ist, um die zweite Ladespannung zu empfangen, und das invertierende Eingangsende des fünften Operationsverstärkers (3082) konfiguriert ist, um die erste Ladespannung abzüglich einer ersten Vorspannung zu empfangen.

9. Ladeschaltung (121) nach einem der Ansprüche 6 bis 8, wobei
das nichtinvertierende Eingangsende des sechsten Operationsverstärkers (3083) konfiguriert ist, um die erste Ladespannung zuzüglich einer zweiten Vorspannung zu empfangen, und das invertierende Eingangsende des sechsten Operationsverstärkers (3083) konfiguriert ist, um die zweite Ladespannung zu empfangen.

10. Ladeschaltung (121) nach einem der Ansprüche 6 bis 8, wobei
der nichtinvertierende Eingangsanschluss des sechsten Operationsverstärkers (3083) konfiguriert ist, um die erste Ladespannung zu empfangen, und der invertierende Eingangsanschluss des sechsten Operationsverstärkers (3083) konfiguriert ist, um die zweite Ladespannung abzüglich einer zweiten Vorspannung zu empfangen.

11. Ladeschaltung (121) nach einem der Ansprüche 6 bis 10, wobei
der erste Operationsverstärker (306) ferner ein zweites nichtinvertierendes Eingangsende umfasst, wobei das zweite nichtinvertierende Eingangsende des ersten Operationsverstärkers (306) konfiguriert ist, um ein erstes Grenzwertsignal zu empfangen, und der erste Operationsverstärker (306) ferner konfiguriert ist zum: Auswählen eines kleineren Werts zwischen dem ersten Grenzwertsignal und dem ersten Signal und Durchführen einer Differenzverstärkung an dem ersten Detektionssignal, um die erste Steuerspannung auszugeben.

12. Ladeschaltung (121) nach einem der Ansprüche 6 bis 11, wobei
der zweite Operationsverstärker (307) ferner ein zweites nichtinvertierendes Eingangsende umfasst, wobei das zweite nichtinvertierende Eingangsende des zweiten Operationsverstärkers (307) konfiguriert ist, um ein zweites Grenzwertsignal zu empfangen, und der zweite Operationsverstärker (307) ferner konfiguriert ist zum: Auswählen eines kleineren Werts zwischen dem zweiten Grenzwertsignal und dem zweiten Signal und Durchführen der Differenzverstärkung an dem zweiten Detektionssignal, um die zweite Steuerspannung auszugeben.

13. Ladeschaltung (121) nach einem der Ansprüche 6 bis 12, die ferner umfasst: einen dritten Operationsverstärker (309) und einen ersten Widerstand (Rsns1), wobei der erste Widerstand (Rsns1) auf einem Pfad des ersten Ladestroms angeordnet ist, ein nichtinvertierendes Eingangsende des dritten Operationsverstärkers (309) an ein Ende mit einer höheren Spannung des ersten Widerstands (Rsns1) gekoppelt ist, ein invertierendes Eingangsende des dritten Operationsverstärkers (309) an ein Ende mit einer niedrigeren Spannung des ersten Widerstands (Rsns1) gekoppelt ist und ein Ausgangsende des dritten Operationsverstärkers (309) an das invertierende Eingangsende des ersten Operationsverstärkers (306) gekoppelt ist.

14. Ladeschaltung (121) nach einem der Ansprüche 6 bis 13, die ferner umfasst: einen vierten Operationsverstärker (310) und einen zweiten Widerstand (Rsns2), wobei der zweite Widerstand (Rsns2) auf einem Pfad des zweiten Ladestroms angeordnet ist, ein nichtinvertierendes Eingangsende des vierten Operationsverstärkers (310) an ein Ende mit einer höheren Spannung des zweiten Widerstands (Rsns2) gekoppelt ist, ein invertierendes Eingangsende des vierten Operationsverstärkers (310) an ein Ende mit einer niedrigeren Spannung des zweiten Widerstands (Rsns2) gekoppelt ist, und ein Ausgangsende des vierten Operationsverstärkers (310) an das invertierende Eingangsende des zweiten Operationsverstärkers (307) gekoppelt ist.

15. Elektronische Vorrichtung (12), die einen ersten und einen zweiten Akku umfasst, und die ferner die Ladeschaltung (121) zum Laden des ersten und des zweiten Akkus nach einem der Ansprüche 1 bis 14 umfasst.

## Revendications

1. Circuit de charge (121) permettant de charger une première et une seconde batterie (304, 305), comprenant : un circuit de régulation de tension (301), un premier transistor d'ajustement (302), un second transistor d'ajustement (303), un premier amplificateur opérationnel (306), un deuxième amplificateur opérationnel (307) et un amplificateur opérationnel entièrement différentiel (3081), dans lequel
le circuit de régulation de tension (301) est configuré pour fournir un premier courant de charge à un premier chemin de charge par le biais du premier transistor d'ajustement (302) afin de charger la première batterie (304), et est en outre configuré pour fournir un second courant de charge à un second chemin de charge par le biais du second transistor d'ajustement (303) afin de charger la seconde batterie (305) ;
une extrémité d'entrée non inverseuse de l'amplificateur opérationnel entièrement différentiel (3081) est configurée pour recevoir une première tension de charge en provenance du premier chemin de charge, une extrémité d'entrée inverseuse de l'amplificateur opérationnel entièrement différentiel (3081) est configurée pour recevoir une seconde tension de charge en provenance du second chemin de charge, une extrémité de sortie inverseuse de l'amplificateur opérationnel entièrement différentiel (3081) est configurée pour émettre un premier signal, et une extrémité de sortie non inverseuse de l'amplificateur opérationnel entièrement différentiel (3081) est configurée pour émettre un second signal ;
une première extrémité d'entrée non inverseuse du premier amplificateur opérationnel (306) est configurée pour recevoir le premier signal, une extrémité d'entrée inverseuse du premier amplificateur opérationnel (306) est configurée pour recevoir un premier signal de détection proportionnel au premier courant de charge, et le premier amplificateur opérationnel (306) est en outre configuré pour délivrer une première tension de commande à une grille du premier transistor d'ajustement (302) afin d'ajuster le premier courant de charge ; et
une première extrémité d'entrée non inverseuse du deuxième amplificateur opérationnel (307) est configurée pour recevoir le second signal, une extrémité d'entrée inverseuse du deuxième amplificateur opérationnel (307) est configurée pour recevoir un second signal de détection proportionnel au second courant de charge, et le deuxième amplificateur opérationnel (307) est en outre configuré pour délivrer une seconde tension de commande à une grille du second transistor d'ajustement (303) afin d'ajuster le second courant de charge.

2. Circuit de charge (121) selon la revendication 1, dans lequel
le premier amplificateur opérationnel (306) comprend en outre une seconde extrémité d'entrée non inverseuse, dans lequel la seconde extrémité d'entrée non inverseuse du premier amplificateur opérationnel (306) est configurée pour recevoir un premier signal de limite, et le premier amplificateur opérationnel (306) est en outre configuré pour : sélectionner une valeur plus petite entre le premier signal de limite et le premier signal, et réaliser une amplification différentielle sur le premier signal de détection pour délivrer la première tension de commande.

3. Circuit de charge (121) selon la revendication 1 ou 2, dans lequel le deuxième amplificateur opérationnel (307) comprend en outre une seconde extrémité d'entrée non inverseuse, dans lequel la seconde extrémité d'entrée non inverseuse du deuxième amplificateur opérationnel (307) est configurée pour recevoir un second signal de limite, et le deuxième amplificateur opérationnel (307) est en outre configuré pour : sélectionner une valeur plus petite entre le second signal de limite et le second signal, et réaliser une amplification différentielle sur le second signal de détection pour délivrer la seconde tension de commande.

4. Circuit de charge (121) selon l'une quelconque des revendications 1 à 3, comprenant en outre : un troisième amplificateur opérationnel (309) et une première résistance (Rsns1), dans lequel la première résistance (Rsns1) est disposée sur un chemin du premier courant de charge, une extrémité d'entrée non inverseuse du troisième amplificateur opérationnel (309) est couplée à une extrémité ayant une tension supérieure de la première résistance (Rsns1), une extrémité d'entrée inverseuse du troisième amplificateur opérationnel (309) est couplée à une extrémité ayant une tension inférieure de la première résistance (Rsns1), et une extrémité de sortie du troisième amplificateur opérationnel (309) est couplée à l'extrémité d'entrée inverseuse du premier amplificateur opérationnel (306).

5. Circuit de charge (121) selon l'une quelconque des revendications 1 à 4, comprenant en outre : un quatrième amplificateur opérationnel (310) et une seconde résistance (Rsns2), dans lequel la seconde résistance (Rsns2) est disposée sur un chemin du second courant de charge, une extrémité d'entrée non inverseuse du quatrième amplificateur opérationnel (310) est couplée à une extrémité ayant une tension supérieure de la seconde résistance (Rsns2), une extrémité d'entrée inverseuse du quatrième amplificateur opérationnel (310) est couplée à une extrémité ayant une tension inférieure de la seconde résistance (Rsns2), et une extrémité de sortie du quatrième amplificateur opérationnel est couplée à l'extrémité d'entrée inverseuse du deuxième amplificateur opérationnel (310).

6. Circuit de charge (121) permettant de charger une première et une seconde batterie (304, 305), comprenant : un circuit de régulation de tension (301), un premier transistor d'ajustement (302), un second transistor d'ajustement (303), un premier amplificateur opérationnel (306), un deuxième amplificateur opérationnel (307), un cinquième amplificateur opérationnel (3082) et un sixième amplificateur opérationnel (3083), dans lequel
le circuit de régulation de tension (301) est configuré pour fournir un premier courant de charge à un premier chemin de charge par le biais du premier transistor d'ajustement (302) afin de charger la première batterie (304), et est en outre configuré pour fournir un second courant de charge à un second chemin de charge par le biais du second transistor d'ajustement (303) afin de charger la seconde batterie (305) ; une extrémité d'entrée non inverseuse du cinquième amplificateur opérationnel (3082) est configurée pour recevoir une seconde tension de charge en provenance du second chemin de charge ou une tension de polarisation de la seconde tension de charge, une extrémité d'entrée inverseuse du cinquième amplificateur opérationnel (3082) est configurée pour recevoir une première tension de charge en provenance du premier chemin de charge ou une tension de polarisation de la première tension de charge, et une extrémité de sortie du cinquième amplificateur opérationnel (3082) est configurée pour émettre un premier signal ;
une extrémité d'entrée non inverseuse du sixième amplificateur opérationnel (3083) est configurée pour recevoir la première tension de charge ou la tension de polarisation de la première tension de charge, une extrémité d'entrée inverseuse du sixième amplificateur opérationnel (3083) est configurée pour recevoir la seconde tension de charge ou la tension de polarisation de la seconde tension de charge, et une extrémité de sortie du sixième amplificateur opérationnel (3083) est configurée pour émettre un second signal ;
une première extrémité d'entrée non inverseuse du premier amplificateur opérationnel (306) est configurée pour recevoir le premier signal, une extrémité d'entrée inverseuse du premier amplificateur opérationnel (306) est configurée pour recevoir un premier signal de détection proportionnel au premier courant de charge, et le premier amplificateur opérationnel (306) est en outre configuré pour délivrer une première tension de commande à une grille du premier transistor d'ajustement (302) afin d'ajuster le premier courant de charge ; et
une première extrémité d'entrée non inverseuse du deuxième amplificateur opérationnel (307) est configurée pour recevoir le second signal, une extrémité d'entrée inverseuse du deuxième amplificateur opérationnel (307) est configurée pour recevoir un second signal de détection proportionnel au second courant de charge, et le premier amplificateur opérationnel (306) est en outre configuré pour délivrer une seconde tension de commande à une grille du second transistor d'ajustement (303) afin d'ajuster le second courant de charge.

7. Circuit de charge (121) selon la revendication 6, dans lequel
l'extrémité d'entrée non inverseuse du cinquième amplificateur opérationnel (306) est configurée pour recevoir la seconde tension de charge plus une première tension de polarisation, et l'extrémité d'entrée inverseuse du cinquième amplificateur opérationnel (3082) est configurée pour recevoir la première tension de charge.

8. Circuit de charge (121) selon la revendication 6, dans lequel
l'extrémité d'entrée non inverseuse du cinquième amplificateur opérationnel (3082) est configurée pour recevoir la seconde tension de charge, et l'extrémité d'entrée inverseuse du cinquième amplificateur opérationnel (3082) est configurée pour recevoir la première tension de charge moins une première tension de polarisation.

9. Circuit de charge (121) selon l'une quelconque des revendications 6 à 8, dans lequel l'extrémité d'entrée non inverseuse du sixième amplificateur opérationnel (3083) est configurée pour recevoir la première tension de charge plus une seconde tension de polarisation, et l'extrémité d'entrée inverseuse du sixième amplificateur opérationnel (3083) est configurée pour recevoir la seconde tension de charge.

10. Circuit de charge (121) selon l'une quelconque des revendications 6 à 8, dans lequel l'extrémité d'entrée non inverseuse du sixième amplificateur opérationnel (3083) est configurée pour recevoir la première tension de charge, et l'extrémité d'entrée inverseuse du sixième amplificateur opérationnel (3083) est configurée pour recevoir la seconde tension de charge moins une seconde tension de polarisation.

11. Circuit de charge (121) selon l'une quelconque des revendications 6 à 10, dans lequel le premier amplificateur opérationnel (306) comprend en outre une seconde extrémité d'entrée non inverseuse, dans lequel la seconde extrémité d'entrée non inverseuse du premier amplificateur opérationnel (306) est configurée pour recevoir un premier signal de limite, et le premier amplificateur opérationnel (306) est en outre configuré pour : sélectionner une valeur plus petite entre le premier signal de limite et le premier signal, et réaliser une amplification différentielle sur le premier signal de détection pour délivrer la première tension de commande.

12. Circuit de charge (121) selon l'une quelconque des revendications 6 à 11, dans lequel le deuxième amplificateur opérationnel (307) comprend en outre une seconde extrémité d'entrée non inverseuse, dans lequel la seconde extrémité d'entrée non inverseuse du deuxième amplificateur opérationnel (307) est configurée pour recevoir un second signal de limite, et le deuxième amplificateur opérationnel (307) est en outre configuré pour : sélectionner une valeur plus petite entre le second signal de limite et le second signal, et réaliser une amplification différentielle sur le second signal de détection pour délivrer la seconde tension de commande.

13. Circuit de charge (121) selon l'une quelconque des revendications 6 à 12, comprenant en outre : un troisième amplificateur opérationnel (309) et une première résistance (Rsns1), dans lequel la première résistance (Rsns1) est disposée sur un chemin du premier courant de charge, une extrémité d'entrée non inverseuse du troisième amplificateur opérationnel (309) est couplée à une extrémité ayant une tension supérieure de la première résistance (Rsns1), une extrémité d'entrée inverseuse du troisième amplificateur opérationnel (309) est couplée à une extrémité ayant une tension inférieure de la première résistance (Rsns1), et une extrémité de sortie du troisième amplificateur opérationnel (309) est couplée à l'extrémité d'entrée inverseuse du premier amplificateur opérationnel (306).

14. Circuit de charge (121) selon l'une quelconque des revendications 6 à 13, comprenant en outre : un quatrième amplificateur opérationnel (310) et une seconde résistance (Rsns2), dans lequel la seconde résistance (Rsns2) est disposée sur un chemin du second courant de charge, une extrémité d'entrée non inverseuse du quatrième amplificateur opérationnel (310) est couplée à une extrémité ayant une tension supérieure de la seconde résistance (Rsns2), une extrémité d'entrée inverseuse du quatrième amplificateur opérationnel (310) est couplée à une extrémité ayant une tension inférieure de la seconde résistance (Rsns2), et une extrémité de sortie du quatrième amplificateur opérationnel (310) est couplée à l'extrémité d'entrée inverseuse du deuxième amplificateur opérationnel (307).

15. Dispositif électronique (12), comprenant une première et une seconde batterie, et comprenant en outre le circuit de charge (121) permettant de charger la première et la seconde batterie selon l'une quelconque des revendications 1 à 14.
